# EUROPEAN PATENT SPECIFICATION

(11) **EP 2 252 019 B1**
(45) Date of publication and mention of the grant of the patent: **09.07.2014**
(21) Application number: 10173618.9
(22) Date of filing: 01.12.1999
(51) Int. Cl.: H04L 12/54, H04L 29/06

(54) **Providing desired service policies to subscribers accessing internet**
Bereitstellung gewünschter Dienstrichtlinien an Teilnehmer, die auf das Internet zugreifen
Fourniture de politiques de services souhaitées à des abonnés ayant accès à Internet

(30) Priority: 03.12.1998 US 205041; 02.03.1999 US 260785
(43) Date of publication of application: 17.11.2010
(62) Divisional of application: 99964015.4
(73) Proprietor: Rockstar Consortium US LP, Richardson, TX 75082 (US)
(72) Inventor: Alles, Anthony, Sunnyvale, CA 94560 (US); Lin, Arthur, San Ramon, CA 94583 (US); Pillalamarri, Prasad, Palo Alto, CA 94301 (US); Hendrick, H Kent, Newark, CA 94560 (US); Daly, Thomas, San Carlos, CA 94070 (US); Mullenex, David, Foster City, CA 94404 (US); Shetty, A Suhas, San Jose, CA 95135 (US)
(74) Representative: Mackenzie, Andrew Bryan

(56) References cited:
- WO-A1-97/49038
- MCAULEY A J ET AL: "Fast routing table lookup using CAMs", NETWORKING : FOUNDATION FOR THE FUTURE. SAN FRANCISCO, MAR. 28 - APR. 1, 1993; [PROCEEDINGS OF THE ANNUAL JOINT CONFERENCE OF THE COMPUTER AND COMMUNICATIONS SOCIETIES (INFOCOM)], LOS ALAMITOS, IEEE COMP. SOC. PRESS, US, vol. CONF. 12, 28 March 1993 (1993-03-28), pages 1382-1391, XP010032383, DOI: DOI:10.1109/INFCOM.1993.253403 ISBN: 978-0-8186-3580-9

## Description

### Field of the Invention

The present invention relates generally to digital communication networks, and more specifically to a system and method for providing desired service policies to subscribers accessing the Internet.

### Related Art

Users often access remote systems using local systems. In a typical scenario, a user may use a computer system (generally located close-by) to access a remote system (generally at a distant location). The access can serve as a basis for several useful applications such as web browsing, electronic mail and data base accesses as is well known in the relevant arts. Remote access devices often exist between local systems and remote systems. A remote access device generally operates as an aggregator (concentrator) or multiplexor of physical connections (e.g., dialed connections over local loops and dedicated T1 lines from large groups) originating from users. The remote access devices generally operate to send digital data bits (Abit groups≅) destined for the users, and receive bit groups originating from the users. Remote access servers (supporting digital and/or digital modems) provided by internet service providers (ISPs), digital subscriber line access multiplexors (DSLAMs) provided by local exchange carriers (conventional and competitive LECs), and cable modems provided by cable television providers are examples of such remote access devices.

A remote access device commonly interfaces with a data switch, which selectively forwards each received bit group to a corresponding destination, typically based on address information encoded in the bit groups. In a common implementation, a data switch corresponds to an Internet Protocol (IP) router, which examines the destination address of an IP packet to determine the next point (typically another router or computer system) to send the IP packet to.

In a conventional implementation, combination of routers and remote access devices may not serve particularized requirements (or desired service policies) of users. A group of users (including the case of a single user) having specific service policy requirements will be referred to as a subscriber in the present application. Examples of particularized requirements of subscribers are first noted. Then, the inadequacy of conventional routers and remote access devices in meeting user requirements is described.

Subscribers may have particularized requirements for several reasons. For example, a subscriber containing a large group such as a business, and the business may wish to limit the aggregate bandwidth used by some or all of the users. Some other business may wish a virtual private network (VPN), having dedicated secure links between different distance locations perhaps for some users but not all. Yet another business may wish to restrict inbound access to certain types of applications (e.g., only web accesses, but not file transfers or telenet) or have different classes of service (COS=s) for different applications.

On top of such requirements for large groups, individual users (subscribers) may have different requirements. These individuals may be part of a large business or home users. A user may wish to be allocated only 56 Kbps during some peak times (e.g., business hours when networks are typically more congested), and much higher bandwidth during other times. An ISP may wish to charge lower rates for such users. In general, it should be appreciated that the users or subscribers can have varying and particularized service policy requirements.

Conventional combinations of data switches and remote access devices may be inadequate in serving a combination of such requirements for several reasons. For example, data switches may be implemented primarily as fast packet forwarding devices, albeit with limited prioritization and access control schemes. Asynchronous transfer mode (ATM) switches prioritizing traffic based on quality of service (QoS) and traffic parameters, and IP routers filtering data of only some applications are illustrative examples.

However, the architectures chosen for conventional data switches and/or remote access devices may not provide for customization of service policies for individual users/subscribers. For example, ATM switches forwarding cells may not have the ability to distinguish between individual users by the examination of a single cell. Data switches operating at higher layers (e.g., IP routers) may be designed to process packets uniformly, usually for attaining speed, and thus may not be designed to provide customized service policies to individual subscribers. In another example, described in WO 97/49038, a communication device is provided which determines which instance of protocol data unit network policy is to be applied to related-received protocol data units, thus network policies are applied and not customized policies for each subscriber. As noted above, such customization may be required in several instances. Therefore, what is needed is a flexible architecture which enables the provision of different customized service policies to different subscribers.

In addition to customization, it is generally necessary that the architecture scale to serve a large number of subscribers. Therefore, what is also needed is a flexible architecture which scales well to serve a large number of subscribers.

### Summary of the Invention

The present invention is related to a method of assigning an IP packet to a processor in an internet service mode (ISN) as recited in Claim 1. Another aspect of the present invention is a method of assigning a cell to a processor in an ISN as recited in Claim 11. In accordance with a further aspect of the present invention there is provided an ISN as recited in Claims 13 and 27 which provides a desired set of service policies to each subscriber. The ISN is particularly useful for remote access providers such as ISPs and LECs (both incumbent and competitive). The access providers may use the ISN as an edge device of an access network and provide customized service policies to each subscriber.

An ISN may contain multiple processor groups, with each subscriber being assigned to a processor group. A processor group may be provided, for example, as a packet service card. A processor group may be configured with the processing rules of all the assigned subscribers such that the processor group may provide custom service policies desired by any of the assigned subscribers.

A port in the ISN maybe designed to determine the specific processor group to which received data is to be forwarded to based on the specific subscriber to whom received data relates to. A switch fabric may then forward the data to the determined processor group based on the determination of the port. The processor group may apply the processing rules related to the subscriber to provide the service policies desired by the subscriber.

As each processor group may need to be designed to serve only a subset of the subscribers (served by the ISN), the present invention may scale well to large and/or complex networking environments.

Custom service policies desired by each subscriber may be provided at the edge of an access network. In an embodiment, the desired service policies may be specified using a configuration manager. The configuration manager may be either integrated with ISN or as a different unit.

The configuration manager may translate the service policies into a set of processing rules, with each processing rule containing a classifier and an associated action. The classifier generally specifies the data flow(s) and any conditions under which the action can be applied to a set of data bits transferred on the data flow(s). In the internet protocol (IP) environment, the source/ destination IP addresses, source/destination ports and the protocol type field together generally define an IP data flow supporting a specific remote access application.

Conditions may include matching of a specific variable defining the service policy. For example, a service policy may specify that data bits be treated a specific way between 9 AM - 5PM, in which case TIME is a variable and the condition is TIME = 9 AM - 5PM. As another example, data bits for a subscriber may be given lower priority if the aggregate bandwidth used by the subscriber is greater than T1, in which case BANDWIDTH is the variable and the condition is BANDWIDTH > T1.

Typically, most processing rules can be constructed statically from the specified service policies. However, some processing rules may need to be instantiated dynamically upon the occurrence of a specific event. For example, the IP address of a subscriber dialing-in to and relying on the access network for allocation of IP address, may not be available up-front. Accordingly, the ISN constructs the processing rules when the subscriber is allocated an IP address after successfully dialing in.

Thus, the ability to dynamically instantiate processing rules enables an ISN to serve subscribers who may asynchronously access an access network, provides the ISN the ability to provide customized service policies to such subscribers also. In addition, as an ISN need not be configured with processing rules for inactive (i.e., not logged on) subscribers, the ISN may be used for serving a large number of subscribers.

As another example of dynamic instantiation of processing rules, in RealAudio type applications, new TCP (or UDP) connections may be initiated in the middle of an application session, and the new connections may have port numbers which cannot be determined beforehand. The port numbers are typically negotiated using control flows as is well known in the relevant arts. The ISN maybe designed to examine packets in control flows and determine the required information, and construct new processing rules once the information is available.

An embodiment of ISN includes a plurality of processor groups, with each processor group again containing multiple processors. All flows for a subscriber may be dedicated for initial processing by one of the processor groups. When ATM cells are used as data bit groups, the channel identifiers can be used for assignment to individual processor group. Packets may be assigned to individual processors within a group in a weighted round-robin fashion for load balancing. Other resource allocation schemes or management policies can be used as well.

The processors processing the packets (to provide the desired services) maybe provided as physical units separated from the access and trunk ports. The physical separation enables the number of processors and ports to be changed (increased or decreased) independent of each other. The resulting flexibility enables an architecture in accordance with the present invention to scale well to support a large number of subscribers.

As noted above, data related to each subscriber maybe assigned to a processor group. An aspect of the present invention provides an efficient approach for assigning the data to a processor group. The assignment is described with reference to an IP packet received as a sequence of ATM cells.

The determination of the specific processor group to which an IP packet is to be forwarded may require the examination of the header data of the IP packet. Such is the case at least when cell data destined for multiple subscribers is received on a shared ATM virtual connection as all cells may contain the same VPI/VCI data. This scenario is commonly encountered when data destined to subscribers is received on a trunk port. In such a scenario, the processor group may be determined by examining the IP destination address located in the IP header.

However, in some situations data further inside the IP packet may need to be examined to determine the subscriber. For example, data related to a subscriber may be received on a specific call of a L2TP tunnel. In such a situation, a received packet may need to be examined for a UDP protocol type, a UDP port number specifying L2TP protocol, a tunnel ID and a Call ID specific to the subscriber.

These examinations may therefore be performed efficiently by using a content addressable memory (CAM) having a search field, mask, and output field for each CAM location. The search field of each location may be configured to store the data identifying a subscriber, and the output field may be configured to store data identifying a processor or a group of processors capable of providing the desired service policies to the subscribers related to the CAM entry.

In addition, the mask for each CAM location may be setup for examination of the bits identifying the subscriber. As an illustration, when data for multiple subscribers is received on a shared ATM connection, a CAM location may be designed to examine only the destination IP address. On the other hand, when data for a subscriber is received on a L2TP tunnel, the mask field of the corresponding CAM location maybe set up to examine several more bytes of data.

Thus, when a first ("header") cell of an IP packet is received, the header data is provided as an input to the CAM, and the output data identifies a suitable processor. As different CAM entries can have different masks, a matching entry can be found in a single CAM access. The output of the matching entry may either represents a processor (group) identifier or may lead to further accesses to determine the processor.

When the output data does not represent a processor identifier, in the embodiments described herein, the output data either contains an index into an IP table or indicates that additional CAM searches are required to determine a processor (group) identifier. The index is useful to minimize the number of CAM entries. The index maybe used to select an entry from a table stored in a fast memory (e.g., SRAM), and the retrieved value may represent the processor identifier or processor group identifier. As an illustration, the CAM entry may examine only the first three bytes of an IP address by choosing an appropriate mask, and thus present a matching entry for 255 IP addresses. The additional access to the fast memory may provide the specific processor identifier.

Additional CAM searches are generally required when a CAM does not contain sufficient number of bits in the search field to identify a subscriber. For example, when subscriber data is received using a L2TP tunnel, it maybe required to examine more number of bits than that available in a search field of a single CAM location. In such circumstances, some of the bits may be examined in a first search and the others in a subsequent search. Only if a match is detected for all the searches, a match is deemed to have occurred.

In an embodiment described in the present application, only two searches may be required. However, embodiments requiring additional approaches are contemplated to be within the scope of the present invention. The searches may be required depending on the formats for the protocols and the number of bits which need to be examined.

The above-noted features can be implemented in either access ports receiving cells from subscribers or trunk ports receiving cells destined for the subscribers in an embodiment of an ISN. The ISN may include multiple processor groups, with a single group typically being configured to process IP packets related to a subscriber. In addition, a switch fabric may be designed to assign cells to one of the groups based on the header of the received cells. Specifically, the VPI/VCI field may uniquely identify the processor group to process the cells received by the switch fabric.

Accordingly, a assignment logic of the present invention determines the processor group by using the CAM, and replaces a portion (e.g., VPI) of the cell header of all cells of the IP packet with the processor group identifier. The switch fabric may then assign all the cells related to an IP packet to the processor group identified by the cell header (VCI/VPI).

Therefore, desired service policies can be provided for individual subscribers by providing separate processing rules for each subscriber, and using the processing rules to process data bits received on different data flows from the subscribers.

An ISN in accordance with the present invention may scale well to serve a large number of subscribers as each subscriber may be assigned to a processor group to provide desired service policies.

It may also be particularly suitable for remote access applications as an ISN can be provided as an edge device, which can control all application data flows to provide desired service policies for each using subscriber using a single ISN.

Easier management and lower cost of subscriber devices are also achieved as the desired service policies can be implemented by a remote access service provider (without requiring intelligent device at the subscriber premises).

Multiple subscribers may share the same ISN as the service policies of one subscriber may not generally affect the other subscribers.

The subscriber policies can be dynamically added to the ISN for the subscribers. This is particularly useful for remote access providers serving subscribers who access remote access networks by dialing-in (or other asynchronous mechanism) as the subscriber policies can be dynamically added to the ISN for the subscribers.

The method enables a large number of subscribers to be served as the processing rules of subscribers can be instantiated dynamically and the ISN needs to be configured with the processing rules of only the active subscribers.

The ISN described in the present application can scale well to serve a large number of subscribers as the number of processors can be increased and the computation load of processing packets can be distributed among the processors.

A flexible architecture is achieved and can serve a large number of subscribers as the processors are physically separated from the ports used for transmission and reception ofdata, and as the number of processors can be change independent of the number of ports, and vice versa.

Hence apparatus for a quick and efficient method to assign cells forming an IP packet to a pre-specified processor or processor group by using a CAM with masks for individual locations is provided.

An identifier in a single CAM access can be determined as each location can be configured with a mask corresponding to the bits which need to be searched for the subscriber (related to the location).

The number of required CAM locations is minimized by using a single CAM location for a group of IP addresses, and using the output of the CAM access as an index to retrieve the processor or processor group identifier.

Additionally a switch fabric may quickly forward IP packets to corresponding processors by substituting the determined processor identifier for the VPI in the cells and by having the switch fabric use the VPI to assign the cells to the processors.

Further features and advantages of the invention, as well as the structure and operation of various embodiments of the invention, are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number.

### Brief Description of the Drawings

The present invention will be described with reference to the accompanying drawings, wherein:
Figure 1 is a flow-chart illustrating a method in accordance with the present invention;
Figure 2 is a block diagram of a telecommunication system illustrating an example environment in which the present invention can be implemented;
Figure 3 is a flow-chart illustrating a method in accordance with the present invention using which a service provider may provide customized service policies desired by each subscriber;
Figure 4 is a block diagram of an embodiment of internet service node (ISN) provided in accordance with the present invention;
Figure 5 is a block diagram of an embodiment of packet service card provided in an ISN in accordance with the present invention;
Figures 6A and 6B are tables illustrating example processing rules providing desired service policies for a subscriber;
Figure 7A is a block diagram illustrating the operation of a CAM with only one common mask for all memory locations;
Figure 7B is a block diagram illustrating the operation of a CAM with a mask for each memory location;
Figure 8 is a block diagram illustrating a circuit which determines the processor for processing an IP packet in an embodiment of the present invention;
Figure 9 is a flow-chart illustrating the steps performed to determine the processor identifier for different applications in an embodiment of the present invention; and
Figure 10 is a block diagram illustrating the detail of an embodiment of assignment logic which modifies the cell header using the method of Figure 9.

### Detailed Description of the Preferred Embodiments

### 1. Overview and Discussion of the Present Invention

An internet service node (ISN) provided in accordance with the present invention enables customized service policies to be provided to individual users or subscribers. The ISN may enable a network manager to specify a desired set of processing rules for each subscriber. When data is received, ISN may first determine the specific subscriber to whom the data relates to, and process the received data according to the processing rules corresponding to the subscriber.

As the related subscriber is first determined for the received data and only the processing rules corresponding to the subscriber may be applied to the data, the data may be processed efficiently without regard to the processing rules of other subscribers served by the ISN. According to another aspect of the present invention, the processing rules corresponding to each subscriber may be assigned to a pre-specified processor or group of processors. Accordingly, the data related to each subscriber may be forwarded to the corresponding processor(s).

As each subscriber may be assigned to a different processor group, the present invention may scale well to service a large number of subscribers. In other words, a service provider may serve more subscribers by adding more processors.

The present invention is described below in further detail with respect to several examples for illustration. However, it should be noted that the invention can be implemented in several other environments, potentially with several variations. A method in accordance with the present invention is described first.

### 2. Method

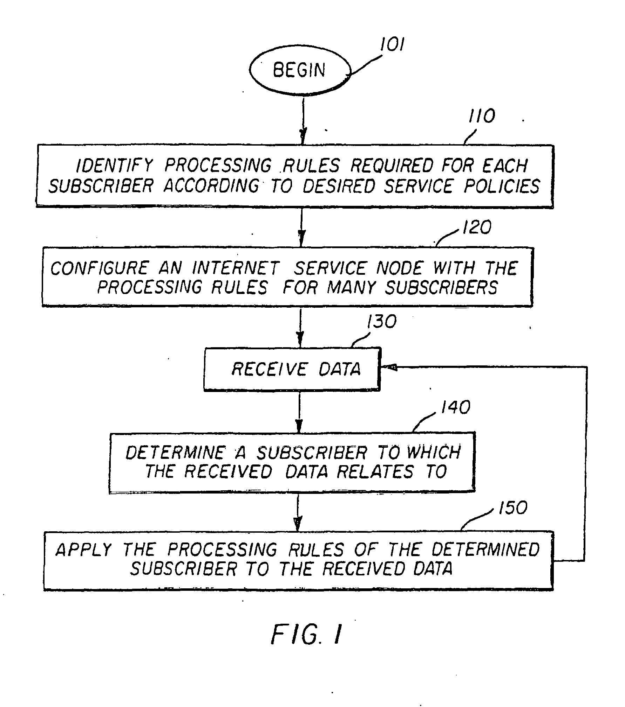

Figure 1 is a flow-chart illustrating a method in accordance with the present invention. In step 110, the processing rules required to provide desired service policies for each subscriber may be identified. A processing rule generally specifies the manner (e.g., discard, forward, prioritization, encryption, etc.) in which data is to be processed. In an embodiment described below, a processing rule may contain a classifier and an associated action. The classifier specifies the data bits (of the subscriber) to which the action is to be applied.

In step 120, an internet service node may be configured with the processing rules corresponding to several subscribers. The configuration mechanism is dependent on the implementation of the internet service node, and the implementation of several such mechanisms will be apparent to one skilled in the relevant arts at least based on the disclosure provided herein.

In step 130, an internet service node may receive data in the form of bit groups. In step 140, the internet service node may determine the subscriber to which the received data relates to by examining the bit groups. The determination of the specific subscriber again depends on the specific format employed for the bit groups. An example implementation with reference to asynchronous transfer mode (ATM) is described below in further detail. However, it should be noted that the present invention can be implemented in conjunction with other formats (such as frame relay, Ethernet) also as will be apparent to one skilled in the relevant arts based on the disclosure herein.

In step 150, the internet service node may apply the processing rules corresponding to the subscriber determined in step 140. The data is forwarded (or discarded) according to the processing rules. As the processing rules are designed to provide the service policies desired by the subscriber, an internet service node may provide service policies in accordance with the present invention. In addition, as an internet service node may be configured with the processing rules which are specific to each subscriber, differentiated services can be provided for each of the subscribers.

The present invention is described below in further detail with respect to an example environment. However, it is helpful to understand the format of bit groups (particularly with respect to ATM), which may aid in determining the specific subscriber to which received data relates to.

### 3. Bit Groups

A bit group generally refers to a number of bits identifiable as a group. Different bit group formats may be used depending on the protocols to support different access methods. Multiple bit groups may form another bit group according to pre-specified conventions as is well known in the relevant arts. As an example, data in several ATM cells may form an IP packet. For purposes of illustration, the present invention is described substantially in the context of internet protocol (IP) packets transported as ATM cells. However, it should be understood that the present invention can be implemented with other protocols and transports as will be apparent to one skilled in the relevant arts. Such other implementations are contemplated to be within the scope of the present invention.

Each ATM cell contains 53 bytes of data, of which 5 bytes are used as header and 48 bytes are used as payload (actual application data using ATM networks). The header contains virtual path identifier (VPI) and virtual channel identifier (VCI) fields, which defines a channel. The next node in the connection path is typically defined when the channel is setup by a suitable signaling scheme. For a detailed understanding of ATM, the reader is referred to a book entitled, ATM: Theory and Applications, (ISBN: 0070603626, Published September 1994 by McGraw-Hill Series on Computer Communications), by David E. McDysan and Darren L. Spohn, which is incorporated in its entirety herewith.

Some times an ATM cell may be identified with a subscriber by examining the VPI/VCI fields (and the port number on which the cell is received). However, many times, individual ATM cells do not contain the information necessary to identify the associated subscriber accurately for providing customized service policies. As should be understood, an ISN may thus need to examine the higher level protocols to determine the subscriber service policies according to which the cells may need to be processed.

Accordingly, the payload of the ATM cells may be assembled to form a packet of the higher level protocol (IP protocol in our example). The assembled packet may then be examined to determine the subscriber to which the data relates to, and the processing rules specifc to the subscriber are applied to the packet. The considerations in the examination of the higher protocol packets are described below with reference to IP environment.

### 4. Identifying Subscribers and Related Protocol (IP) Packets

The manner in which service policies can be associated with packets related to individual subscribers will be apparent by understanding the manner in which packets relate to remote access applications as described below.

Each typical remote access application requires a connection containing data flows in at least two directions. A data flow commonly refers to a sequence of IP packets from a source system to a destination system for supporting an application. In the IP environment, applications are typically identified by TCP or UDP ports, which are generally pre-specified or negotiated to identify the relationship with an application. Source and destination port numbers are typically used. The protocol type (TCP, UDP or ICMP), the port numbers along with the source and destination IP addresses, define an IP flow.

Some application-specific sessions employ more than the two flows, and possibly multiple connections. All flows related to an application session define a conversation. In IP environment, conversations are generally implemented on top of TCP (transmission control protocol), UDP (user datagram protocol), and ICMP (Internet control message protocol) protocols as is well known in the relevant arts. A conversation may contain multiple data flows depending on the application. For example, applications such as file transfer protocol (FTP) and RealAudio employ multiple flows, some times using a combination of higher layers (e.g., TCP vs. UDP in the IP fields).

TCP is the most common high level transport used by applications as TCP provides reliable stream of data using potentially unreliable IP packet transfer. A TCP connection generally contains two data flows, with the port numbers and IP addresses reversed. For example, assuming N1, N2, N3 and N4 respectively refer to the source IP address, source port number, destination IP address and destination port number for a data flow in one direction, the data flow in the other direction will have N2, N1, N4 and N3 for the same variables respectively. Multiple TCP connections may be used to implement an application.

In the case of UDP, the source ports generally are unpredictable when examined in the path between the two end systems. In the case of ICMP, the ports are replaced by type and identification fields.

From the above, it should be appreciated that each flow can be uniquely identified by the examination of the IP packet content. In addition, many types of applications use pre-specified port numbers (e.g., SMTP mail uses port 25), which can be used to identify the specific user applications if the processing rules are specified per user application.

In some instances, the port numbers used for flows in a conversation maybe determined based on negotiations conducted on a >control flow=, typically setup on a pre-specified well-known port. For example, in multi-media (containing a combination of text, voice and video) application, multiple flows maybe used for transferring digital data related to each multi-media component. A control connection is first initiated on a pre-defined port (e.g., port 200), and the ports for remaining flows are determined based on packet flows on the control connection. The port numbers for these new flows is encoded according to a pre-specified convention as is well known in the relevant arts.

Using at least the general formats and protocols illustrated above, an ISN maybe implemented to provide desired service policies to each subscribers as described below in further detail. For illustration, an example environment in which the present invention can be implemented is described first. Example embodiments of the present invention are then described.

### 5. Example Environment

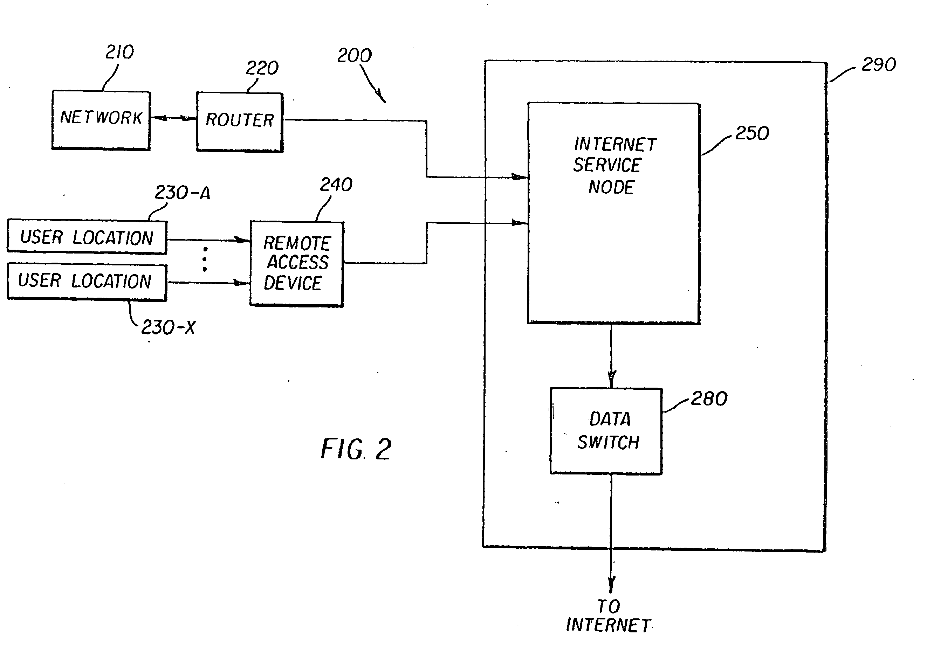

Figure 2 is a diagram illustrating an example telecommunication environment 200 in which the present invention can be implemented. The Figure illustrates the manner in which ISN 250 can be used by a remote access service provider (e.g., internet service provider) to provide differentiated services to subscribers. User (subscriber) locations (210, 230-A and 230-X) interface with internet service node (ISN) 250 using different access technologies. ISN 250 is provided in access network 290. ISN 250 enables different desired service policies to be provided to different users in accordance with the present invention.

User network 210 may contain several systems connecting to router 220. User network 210 may be viewed as containing one subscriber or multiple subscribers. Router 220 may transfer data to ISN 250 as IP packets using protocols such as serial line interface protocols (SLIP) or point-to-point protocol (PPP). User location 230-A and user location 230-X are shown connected to remote access device 240, which may correspond to a remote access server (supporting analog and/or digital modems) or DSLAM implemented in a known way. Remote access device 240 may transfer data as IP packets segmented into ATM cells. Each location 230 may contain a single or multiple subscribers as described below.

It should be understood that the interfaces and subscriber locations of Figure 2 are merely examples. ISN 250 may interface with different subscriber locations using different media and technologies without departing from the scope of the present invention as will be apparent to one skilled in the relevant arts. Such other implementations are contemplated to be within the scope of the present invention.

ISN 250 processes the data received on various interfaces in accordance with the present invention to provide desired service policies to different subscribers. Even though not shown, remote access device 240 may also be considered part of access network 290. Also, ISN 250 may interface directly with the Internet instead of relying on data switch 280. In general, data switch 280 maybe needed if ISN 250 is not implemented including routing functionality. The desired service policies are specified by or translated into processing rules, which indicate the manner in which data corresponding to different subscriber applications needs to be processed. To enable different bit groups to be correlated with different applications, ISN 250 may combine the bit groups into packets containing the necessary information. The processing rules are then applied to packets to provide the desired service policies. Data switch 280 may receive bit groups from ISN 250 and interface with other external systems in the Internet. Data switch 280 may correspond to an IP router, ATM or frame relay switch according to a pre-specified design.

As also shown in Figure 2, ISN 250 has particular application for remote access service providers such as ISPs and LECs (incumbent or competitive). Because of the ability to provide desired service policies to various subscribers, ISN 250 of the present invention maybe placed at the edge (i.e., interfacing with subscriber equipment) of remote access network 290. In such a case, ISN 250 may be referred to as an edge device, ingress/egress router or gateway.

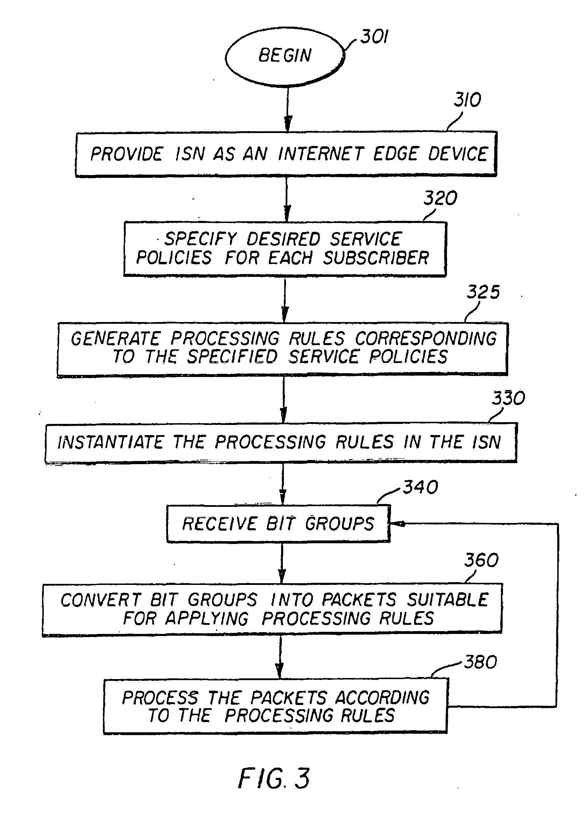

As will be apparent from the description below, using ISN 250 at the edge enables subscriber equipment (e.g., router 220) to be implemented with less complexity, and thus to provide easier management and lower cost. Such a feature is particularly important for ISPs and LECs. Accordingly, Figure 3 illustrates the manner in which the desired service policies can be provided to each subscriber.

### 6. Providing Differentiated Services Using an Edge Device

Figure 3 is a flow chart illustrating the manner in which a service provider may provide differentiated services to subscribers in accordance with the present invention. In step 310, ISN 250 of the present invention is provided as an edge device in the access network as depicted in Figure 2. ISN 250 maybe implemented as an IP router because of the wide-use of IP protocol by various systems.

In step 320, different service policies may be specified for each subscriber. The service policies may specify, for example, the aggregate bandwidth which can be used by a subscriber or some of the systems used by the subscriber, firewall parameters (which applications/IP addresses are permitted out/in), security (anti-spoofing, virtual private network with encryption and tunneling) for specified conversations, priority in usage of buffer and bandwidth (e.g., higher priority to interactive applications such as telenet), traffic steering, etc. Examples of specifying the service policies are described below in further detail.

In step 325, processing rules corresponding to the service policies may be generated. Each processing rule contains a classifier and associated action. The classifier specifies all the data flows and any conditions under which the associated action needs to be applied to the data on the data flows. In the IP environment, each data flow in turn may be uniquely identified by the protocol type, source/destination IP addresses and (TCP/UDP) source/destination ports. A classifier may specify multiple data flows.

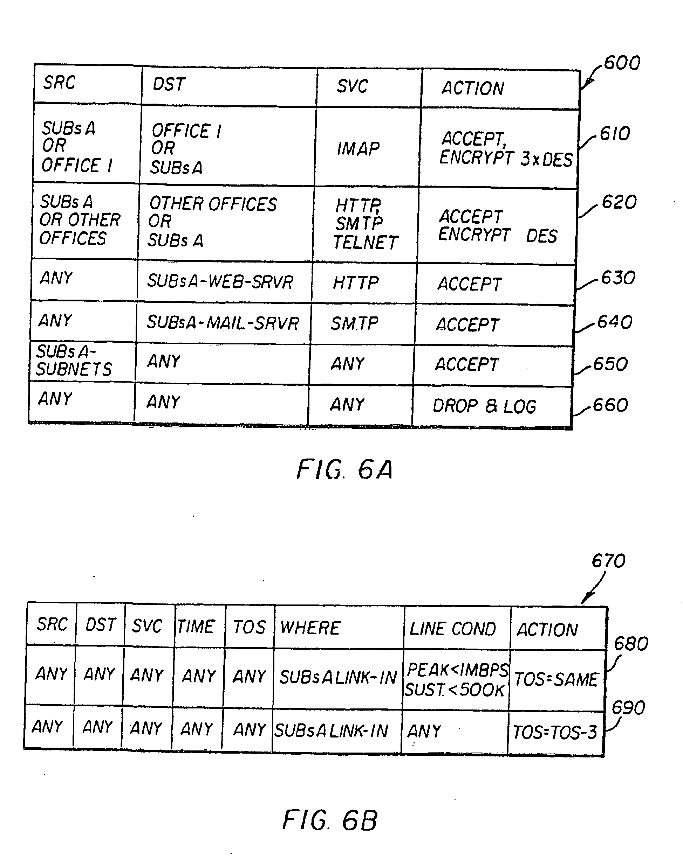

Conditions may be specific to the type of service policy being implemented. For example, a subscriber maybe permitted higher bandwidth during non-business hours. Another subscriber may have the data being given a lower priority if the data is destined to a specific subscriber during a specified time of day. Examples of the conditions are described in further detail below with reference to Figure 6B.

Many processing rules may be generated up-front when the service policies are specified. However, for some processing rules, the necessary information may not be available up-front. In such a situation, rules are generated dynamically when the information is available. Some example scenarios for dynamic generation of processing rules are noted below.

One example scenario requiring dynamic generation of rules is when a subscriber uses a dial-up connection with access network 290 and relies on access network 290 to assign an IP address. For example, with respect to Figure 2, user location 230-A may correspond to a personal computer using a modem. The IP address for a machine at user location 230-A may be assigned by an authentication-authorization-access (AAA) server (not shown in the Figures) when a user establishes a dial-up connection as is well known in the relevant arts. Assuming that the processing rules require an allocated IP address, the processing rule maybe generated only after allocation of the IP address.

As another example, in the case of some applications, the data flows may be initiated in the middle of an application session, and the port information may be available only after the corresponding data flow is initiated. The port information is typically determined during negotiation between the two end systems, and the port information is generally contained in the packets serving as a basis for the negotiation.

Accordingly, ISN 250 may have to monitor the packets on some flows to determine the port number of other flows. ISN 250 may then use the determined information to generate the processing rules with classifiers and associated action.

In step 330, the processing rules are instantiated in ISN 250. Instantiation generally refers to making the processing rule active by proper configuration of ISN 250. Once instantiated, ISN 250 applies the processing rules to the corresponding subscriber data as described below in further detail.

It maybe noted that some of the processing rules maybe instantiated up-front, for example, at the earlier of when ISN 250 boots up or when the desired services are specified. Some other processing rules may be instantiated when generated as described above in step 325.

In step 340, ISN 250 may receive bit groups according to the specific interface provided to the subscriber equipment. In step 360, the bit groups are converted into packets suitable for applying processing rules. If the bit group contains sufficient data for applying processing rules, the bit group itself may be treated as a packet without conversion. For example, the bit groups correspond to a complete IP packet without fragmentation, no assembling may need to be performed. If the bit group is an ATM cell, payload of multiple cells may be combined (assembled) to form an IP packet.

Sometimes the data in multiple IP packets may in turn need to be combined into a single packet, typically when the IP packet is fragmented. Fragmentation may be performed, for example, to make individual IP packets size small to conform to maximum packet size allowed by an intermediate network in the connection path. The combined packet will also be referred to as a packet. In general, bit groups may be assembled multiple levels to determine whether subscriber data (received in the form of bit groups) matches a classifier.

In step 380, the packets are processed according to the processing rules provided per subscriber. That is, each packet is first associated with a subscriber, and the processing rules corresponding to the subscriber are applied. As is well known in the relevant arts, an IP address may be shared by multiple machines during remote access. Accordingly, the virtual channel number (e.g., VCI/VPI combination in ATM, DLCI in frame relay) may first identify a subscriber, and the processing rules associated with the subscriber may be applied to the packets received or sent on the channel.

Multiple subscribers may share a single channel identifier in some situations. For example, when a sub-group of network 210 is viewed as a subscriber, the subscribers of network 210 may share a single channel. In such a case, the IP addresses may be designed to be non-overlapping so that different flows are uniquely associated with different subscribers. Similarly, ISN 250 may receive packets destined for subscribers on a single channel. In such a situation, ISN 250 may need to examine the IP addresses and other information to associate a packet with a subscriber.

The processing rules may need to be applied in one of several possible orders to ensure predictable and desired service policies. In general, the processing determines whether/ where/ how and at what priority to forward the packet. To implement the processing rules, several >states= may need to be maintained in ISN 250. For example, if a pre-determined aggregate bandwidth is allocated to multiple flows, the number of bits transferred for the multiple flows may need to be maintained for limiting the overall bandwidth. The data in the packet generally needs to be forwarded according to the interface provided with the next system in the connection path.

Thus, by applying the processing rules to different packets, the desired service features maybe provided to each subscriber. The method of Figure 3 maybe implemented in several ISNs. An embodiment of ISN 250 is described below in further detail.

### 7. Internet Service Node

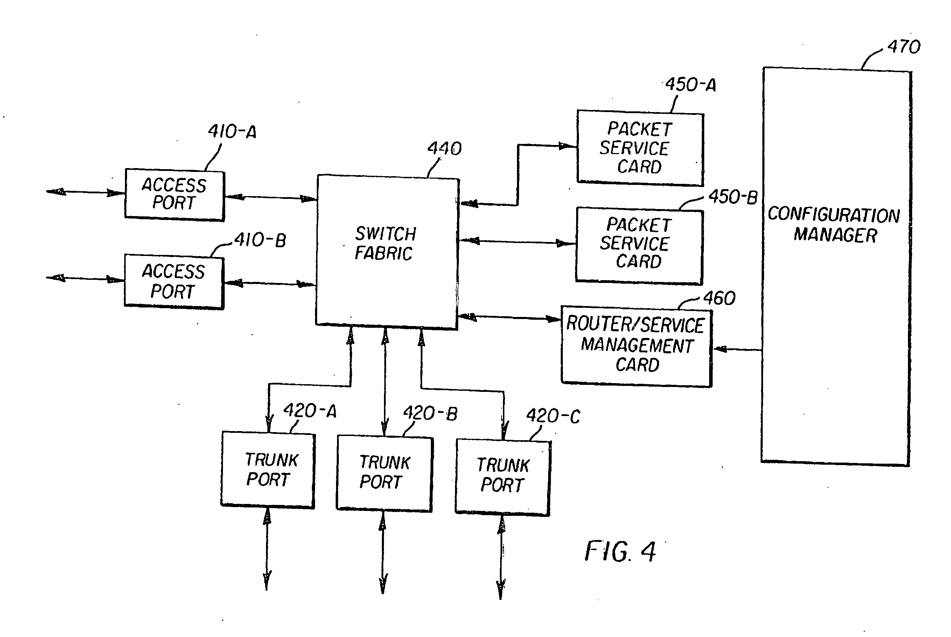

Figure 4 is a block diagram illustrating the details of ISN 250 in one embodiment. ISN 250 may include access ports (410-A and 410-B), trunk ports (420-A, 420-B and 420-C), switch fabric 440, packet service cards 450-A and 450-B, route/service management card (RMC) 460 and configuration manager 470. Trunk ports 420-A, 420-B and 420-C will be collectively or individually referred to by 420 as will be clear from the context. Similar convention is used with reference to other components described in the present application.

It maybe noted that packet service cards 450 are physically separated from ports 410 and 420. The physical separation enables the number of packet service cards 450 to be changed independent of the number of ports 410 and 420, and vice versa. Such a flexibility enables the ISN 250 to scale well to serve a large number of subscribers.

Access ports 410 provide the necessary physical interface to receive and send cells in a pre-specified format. Protocols such as Sonet may be used for high speed interface. For purposes of illustration, access ports 410 will be assumed to send and receive data in the form of ATM cells. Each subscriber port 410 forwards the ATM cells to switch fabric 440. Trunk ports 420 provide high speed access lines for internet access to subscribers. Trunk ports 420 receive ATM cells (or other bit groups) from switch fabric 440, and forwards the cells on the corresponding lines as specified by the channel identifier (or other destination address). Similarly, trunk ports 420 may receive data bit groups in the form of ATM cells or IP packets from the Internet and send the data bit groups to switch fabric 440. In this reception scenario, higher level protocol information (e.g., IP header) may need to be examined to determine the specific processor group to which the data is to be forwarded. Once the corresponding processor group receives the data, the data is examined to determine the specific subscriber to which the data relates to, and the corresponding processing rules are applied.

In an embodiment, multiple ports are provided on a line card and each port can be configured either as a trunk port or access port. The line cards can support different access technologies such as frame relay, ATM, packet over Sonet, Fast Ethernet, Gigabit Ethernet. Configuration manager 470 provides a convenient user interface to enable different service policies to be specified for different subscribers. The service policies determine the services provided to different subscribers. Configuration manager 470 may communicate various configuration parameters (as determined by the service policies) to RMC 460, and RMC 460 may in turn configure the different components to provide the service policies. In an embodiment, configuration manager 470 is implemented as a separate computer system, which interacts with ISN 250 according to a pre-specified protocol. In an alternative embodiment, configuration manager 470 may be integrated into ISN 250.

Configuration manager 470 may translate the service policies into processing rules when the information is available, and provide the processing rules to a corresponding packet service card 450. Packet service card 450 may instantiate the processing rules for the corresponding subscriber. For example, configuration manager 470 may interact with a authorization-authentication-access (AAA) server to determine when an IP address is allocated to a subscriber accessing the access network by a dial- in connection, and provides the processing rules corresponding to the subscriber to one of the packet service cards 450. Route/service management card (RMC) 460 executes routing protocols such as Open Shortest Path First (OSPF), RIP, or BGP to determine the next hop (or forwarding information in general) for each IP packet. The routing protocols can be executed in known way. RMC 460 may provide forwarding information in the form of VCI/VPI information to identify the next hop of the IP packet.

In addition, RMC 460 may configure different components of ISN 250 to enable different features of the present invention. With respect to L2TP, RMC 460 maybe designed to process the requests for setting up an L2TP tunnel and calls within the tunnel. RMC 460 may provide the call ID, tunnel ID and any other information necessary to the corresponding access/trunk port receiving data related to the tunnel. The access port may then use the information to assign IP packets received in the tunnel to a specific packet service card 450.

Switch fabric 440 receives bit groups from access ports 410, and forwards the received bit groups to packet service cards 450 upon receiving the data for an entire packet. If the data bits are received as ATM cells, the last cell for a packet may be determined according to AAL5 protocol well known in the relevant arts. Thus, all the cells forming a frame may be sent to an appropriate packet service card 450 once the data for a packet is available. Different service policy types may be implemented in different packet service cards 450. Accordingly, each subscriber (using the connection or subscriber identifier) may be assigned to a packet service card providing the desired service policy types.

To determine the appropriate packet service card, switch fabric 440 may maintain a channel identifier associated with each channel on which the bit groups are received. In case of ATM cells, the VCT/VPI information in the bit groups uniquely defines such a channel. The physical port number (on which the data is received) and channel identifier may uniquely identify each subscriber (or a group of subscribers with non-overlapping IP addresses) when data is directly received from a subscriber and destined for the Internet. On the other hand, when data is received from the Internet, the determination of the associated subscriber may require examination of the IP header. In general, switch fabric 440 may buffer the cells until a last cell of a packet is received, and forwards all the cells for the packet to a packet service card allocated for an individual subscriber.

Switch fabric 440 receives cells from access ports 410 and trunk ports 420, and forwards the cells to one of the packet service cards 450. Switch fabric 440 may forward the received cells to packet service cards 450 upon receiving the data for an entire packet. Switch fabric 440 may use a high speed random access memory (not shown in the diagrams) for buffering the cells while awaiting the arrival of the last cell. The last cell for a packet may be determined according to AAL5 protocol well known in the relevant arts. Thus, all the cells forming a frame may be sent to an appropriate packet service card 450 once the data for a packet is available.

Switch fabric 440 may receive packets from packet service cards 450 after processing according to the service processing rules, and send the received packets on one of the trunk ports 420. The specific trunk port 420 may be determined by associating a specific trunk line card 420 for each channel, which may also be identified by a channel identifier provided by packet service cards 450. Switch fabric 440 may convert the packets into cells prior to transmission on trunk line card 420.

Packet service cards 450 may be configured with many processing rules for each subscriber, with each processing rule containing a classifier and an associated action. The classifier generally specifies the data flow(s) and any conditions under which the action can be applied to a set of data bits transferred on the data flow(s) to achieve provide the service policies desired for each subscriber. In the internet protocol (IP) environment, the source/destination IP addresses, source/destination ports and the protocol type field together generally define an IP data flow supporting a specific remote access application.

Each packet service card 450 may be configured with the processing rules corresponding to a subscriber for one of several reasons. For example, by assigning the data processing for each subscriber to a specific packet service card 450, each packet service card 450 may need to be configured only with the processing rules corresponding to the subscribers assigned to it. Multiple packet service cards 450 may be employed to scale well to large complex large environments. In addition, some of the packet service cards 450 may have specialized functionality for processing some types of subscriber data.

Packet service card 450 may first assemble the cell data into packets which can be identified with a subscriber. Once the subscriber is determined, the flow to which the packet relates to is determined, and the corresponding processing rules are applied. In the process, packet service card 450 may determine whether to discard or forward the packet. Packet service card 450 may process the received cells according to the processing rules for the subscriber to provide the desired service policies to each specific subscriber.

Packet service card 450 may determine the next hop for the packet based on the routing information provided by route management card 460 or the cell header associated with the incoming cells. A new VCI/VPI number is generated according to the next hop for all the cells to be generated from the processed packet. Packet service card 450 sends the cells with the new VCI/VPI number to switch fabric 440 for forwarding on appropriate trunk port 420. Even though each subscriber is described as being assigned to a single packet service card 450, it should be understood that multiple packet service cards may process data related to single subscriber. Such a situation is typically present when one of the packet service cards is designed to provide specific specialized services for all/many subscribers, and other packet service card(s) is designed to provide the remaining services desired by the subscriber. In such a situation, the data processed by one of the service cards may be forwarded to another packet service card according to a pre-determined sequence using switch fabric. The processors in all such packet service cards may also be referred to as a processor group.

By applying the processing rules to each packet, packet service card 450 may enable ISN 250 to provide several features in accordance with the present invention. Several embodiments of packet service card 450 maybe implemented without departing from the scope of the present invention. An example implementation is described below.

### 8. Packet Service Card

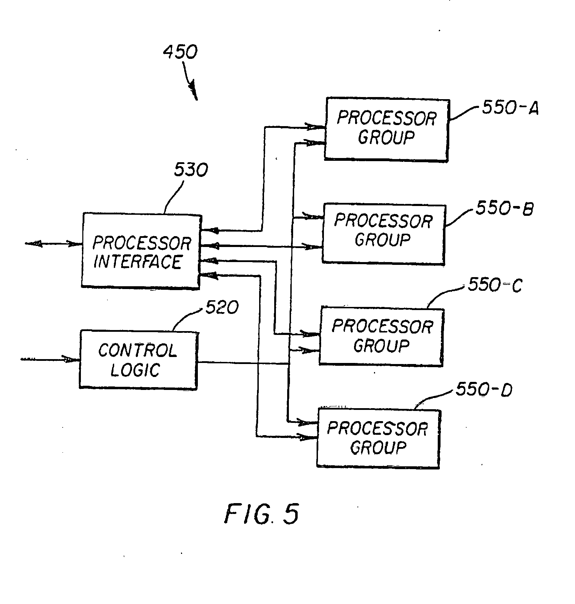

Figure 5 is a block diagram illustrating the details of an embodiment of packet service card 450. Packet service card 450 may contain four processor groups (550-A through 550-D), processor interface (PIF) 530, and control logic 520. The operation of the each block is described below in detail.

Control logic 520 coordinates and controls the operation of other components in packet service card 450. Control logic 520 may determine which of the processors in a processor group may process a packet. In an embodiment, packets are assigned on a round robin basis among the four processors. Control logic 520 may operate in conjunction with configuration manager 470 to instantiate (configure) processor groups 550 with the processing rules related to assigned subscribers.

When implementation of a service policy requires dynamic instantiation of a processing rule based on examination of data transferred in the data flows, control logic 520 may examine the data flows and generate new processing rules. As an illustration, in H.323, voice-over-IP, or streaming applications, new connections or data flows may be dynamically created based on negotiations implemented in control flows. Control logic 520 may examine the control flows to determine any necessary information (e.g., port numbers) and create processing rules based on the examination. Control logic 520 may configure processor group 550 to ensure processor group 550 performs an operation specified by the processing rule. In turn, control logic 520 may be controlled due to a service policy specified using configuration manager 470.

PIF 530 may receive cells from switch fabric 440 and forward the cells (forming an IP packet) to one of the four processor groups 550. In an embodiment, PIF 530 may contain four input ports corresponding to the four processor groups, and switch fabric 440 may send the cells on one of the four ports (and thus to a specific processor group) as determined by the VCI header information. That is, the VCI header may determine not just the packet service card, but also the specific processor group for processing the received cells.

Several subscribers may be uniquely assigned to each processor group 550. RMC 460 may generate the necessary commands to configure each processor group 550 with the processing rules associated with the assigned subscribers. RMC 460 may determine which specific processor group 550 is to process data related to each subscriber, and configures the corresponding processor group with the processing rules associated with the assigned subscribers. The configuration commands may be issued via processor interface 530.

Each processor group 550 may contain several processors and an SRAM (not shown) for storing the cells related to a packet. The SRAM maybe shared by all the processors contained in the processor group 550. All processors in a processor group 550 may be capable of processing data related to all the assigned subscribers. While a processor group may be determined by the channel identifier associated with the cells, the specific processor processing the packet may be determined by control logic 520.

As each subscriber may be assigned to a processor group 550, a service provider may service more subscribers by adding additional processor groups. Accordingly, solutions provided in accordance with the present invention scale well to large networks. In addition, a processor group maybe designed to serve the specific policy requirements of a subscriber. For example, only processor group 550-B may be designed to provide virtual private networks (VPNs), and all the subscribers requiring VPNs maybe assigned to processor group 550-B. Some example service policies are described below in further detail with reference to Figures 6A and 6B.

### 9. Examples of Service Policies

Figures 6A and 6B together illustrate example subscriber policies for a subscriber. For illustration, the packets are described as being processed according to a first match policy. However, other matching policies such as >best match= maybe used as will be apparent to one skilled in the relevant arts.

Figure 6A illustrates how different policy rules can be specified to implement security. It is first noted that the classifier for security policy is chosen to merely include data required for identifying flows (no conditions). Service rule 610 specifies a classier of IP address = SubsA or Office1, destination IP address = SubsA or Office1, service = IMAP, and an action to encrypt matching data using 3xDES encryption protocol. That is, the mail exchanges between SubsA and Office 1 are to be encrypted using the specified protocol.

Two processing rules maybe generated to implement service rule 610, with each rule having a classifier specifying one flow. In general, each processing rule may be generated as a five tuple with source IP address, destination IP address, protocol field (e.g., TCP or UDP), source port number, and destination port number.

At least some of the service rule parameters are readily available up-front and can thus be statically translated into corresponding processing rule parameters. Thus, assuming the IP addresses SubsA and Office 1 of service rule 610 are known beforehand, two processing rules may be generated from the service rule as the TCP port number for IMAP is pre-specified. However, if one of the IP addresses (e.g., SubsA) is to be generated dynamically, for example as the user system needs to establish a dial-in connection, user interface 470 may dynamically generate the processing rules after the user is assigned an IP address. The processing rule may also be instantiated dynamically.

Service rule 620 attempts to accept and encrypt all HTTP, SMTP, and TELNET traffic from and to SubsA. Processing rule(s) maybe generated for each of HTTP, SMTP, and TELNET. The protocol types and port numbers for these three applications are pre-specified, and accordingly processing rules maybe generated statically assuming the IP addresses (for SubsA and other offices) are also known.

Service rule 630 accepts all HTTP traffic to SubsA-Web-Srvr. Service rule 640 accepts all smtp traffic with SubsA-Mail-Srvr. Service rule 650 accepts all traffic from SubsA-Subsets. Service rule 660 drops (discards) all other data and makes a log of the dropped data for later accounting and analysis. As may be readily appreciated, the approach of Figure 6A can be used to implement security requirements specific to a subscriber. Different subscribers may have different policy rules to suit their individual needs.

In the approach of Figure 6A, each classifier generally includes information necessary to identify flows. Classifier may include conditions specific to service policy as illustrated with reference to Figure 6B, which illustrates service policy rules for policing in an embodiment. Policing generally refers to prioritization and allocation of bandwidth to different connection sharing available bandwidth.

Service rule 680 specifies that if the data is being received on SubsAlink-In at an aggregate bandwidth less than 1 Mbps and a sustained bandwidth of less than 500 Kbps, the data has to be re-transmitted with the type of service (TOS). Sustained bandwidth and aggregate bandwidth can be measured according to one of several known ways. The classifier specifies that the rule is applicable at any time of day and for all TOS. TOS, Time, Where and LineCond are examples of conditions for the policing service policy.

Service rule 680 decreases the priority of the data if the line conditions of service rule 680 are violated. As ISN 250 of the above-described embodiments regenerates data bit groups prior to sending on trunk ports 420, the TOS values can be decremented in a known way.

Using at least the above-described embodiments, particularized service policies can be provided to each subscriber by an ISP. As noted above, the invention has particular application for remote access application.

In addition, implementation of ISN 250 as an edge router enables simple devices to be deployed at the subscriber premises. As an illustration, without the present invention, a subscriber at network 210 of Figure 2 may need to implement a complex router 220 to provide different service policies. The management overhead may be unacceptably high. In contrast, by using the present invention, the desired service policies can be provided by a central remote access provider using suitable configuration of ISN 250, thereby simplifying the configuration and management of devices at subscriber premises.

However, one requirement associated with internet service node is that the data related to the subscribers be assigned quickly and efficiently to specific processor(s) for processing so that a solution in accordance with the present invention can be used in environments with a large number of subscribers. Some problems associated with such assignment and solutions in accordance with the present invention are described below.

### 10. Problems With Assignment to Processors

As may be noted from the above description, switch fabric 440 may need to assign cells of an IP packets to a specific processor group 450. As switch fabric 440 may receive cells on different access ports and trunk ports, the assignment to a specific processor group 450 may need to occur quickly (in a short duration of time).

For quickness, the assignment may be based on the examination of cell headers. In the further description below, the assignment will be assumed to be based on VPI only. However, other parts of the cell header can be used in the assignment of the cells without departing from the scope of the present invention. When cells are received on access ports 410, the VPI number of the connections on which the cells are received may be controlled to correspond with an identifier of the specific processor group 450 as will be apparent to one skilled in the relevant arts.

However, when cells are received on trunk ports 420, multiple subscribers typically share the same ATM virtual connection. Subscriber data for different subscribers received on the same ATM connection may need to be assigned to different processors. In such situations, the data in the ATM cells may need to be examined for determination of the specific processor for processing the ATM cells.

In the case of IP networks, the IP destination address contained in the payload of the first ATM cell of an IP packet may need to be examined to determine the (subscriber) processor to assign the IP packet to. As is well known in the relevant arts, a sequence of cells represents an IP packet, and the first cell typically contains the IP destination address. Accordingly, it may be necessary to examine at least the IP header information when cell data is received from trunk ports 420.

The need to examine the cell data is not limited to cases when cells are received on trunk ports 420. The cell data may need to be examined when the cells are received on access ports 410 as well. For example, when cells relate to applications such as tunneling (e.g., L2TP and L2F) and IP security (typically containing data related to multiple subscribers on the same virtual circuit), the header data for higher layers (e.g., UDP, TCP) may need to be further examined to determine the specific processor for processing the cells.

Such a requirement is illustrated with reference to L2TP for conciseness. However, it should be understood that the present invention may be applied to several other applications. Using the present invention in the context of such applications is contemplated to be within the scope of the present invention.

In L2TP, all IP packets using a tunnel share the same IP destination address, that is, one of the IP addresses assigned to ISN 250. However, L2TP is generally implemented on top of UDP protocol type, and the UDP port number identifies that the IP packet relates to a L2TP tunnel. Further, the tunnel ID and call ID fields in the UDP packet may identify the specific subscriber to which an IP packet may relate to. The processor for processing maybe determined based on the identity of the subscriber. Accordingly, it may be necessary to examine the higher layer protocol (UDP) headers or further information in the packet to determine the subscriber information.

To enable switch fabric 440 to assign the cells to one of the packet service cards 450 based on examination of the cell header, it maybe desirable to substitute a different cell header (or other identification data) to enable switch fabric 440 to assign cells to a packet service card 450 identified by the cell header. Such substitution may be required in both the examples of above. The examination of higher layer protocols and substitution may need to be performed in real-time to avoid extensive buffering.

The present invention enables examination of cell headers and substitution using CAMs having masks for individual memory locations. The operation of CAMs with masks for individual memory locations is generally described first. The present invention is described then with examples.

### 11. CAMs With Masks for Individual Memory Locations

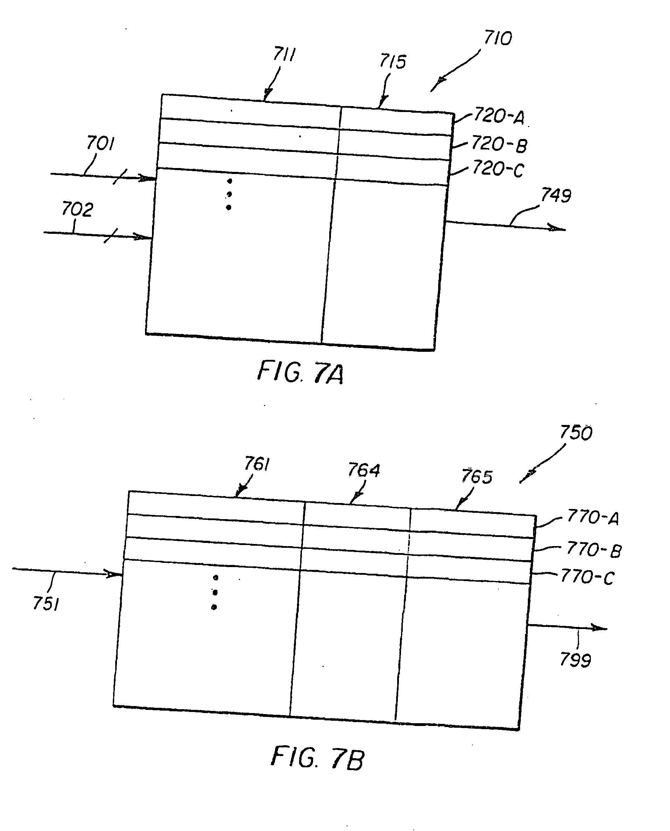

To appreciate the efficiencies achieved by CAMs with masks for individual memory locations, the operation of conventional CAMs are first described with reference to Figure 7A. Figure 7A includes CAM 710 which generally provides for only one mask for access. CAM 710 is shown as having search field 711 and output data field 715 for each of CAM locations 720-A, 720-B, etc.

In operation, an input value and mask are respectively received on value bus 701 and mask bus 702. Each of the input value and mask has a number of bits equal to the search field length (number of bits in search field 711). The data stored in output field 715 is generated as output on output bus 749 if the input value at bit positions specified by mask bus 702 match (or equal) the corresponding bits of search field 711. That is, only the bits in bit positions specified by mask 702 may be compared.

Thus, if different bit positions need to be matched in different memory locations 720 of CAM 710, a corresponding number of multiple accesses (each with a different mask) may need to be performed.

It should be appreciated that the IP header (including UDP/TCP/ICMP information) data identifying each subscriber may be stored in each of the locations 720, and IP header data in a received first cell of an IP packet may be provided as value 701. However, as the bit positions to be examined differ for different situations (e.g., when differentiation is based on IP destination address only, the IP destination address need to be examined; and the IP destination address, protocol type, UDP port number, tunnel ID and port ID may need to be examined for L2TP), different mask values may need to be provided on mask bus 702.

That is, multiple CAM accesses may need to be performed, with each access having a corresponding mask representing the bit positions to be examined for a subscriber match. Such multiple CAM accesses may consume undesirably long duration of time, and may thus be undesirable.

An alternative embodiment may use multiple units of CAM 710, with each CAM serving subscribers with a specific mask. However, multiple CAMs may be undesirable at least due to cost considerations. A single CAM with masks for individual CAM locations may be used which avoids the need for multiple accesses as described below.

Figure 7B is a block diagram of CAM 750 having multiple locations (770-A, 770-B and 770-C). CAM 750 may include input bus 751, search field 761, output field 765 and output bus 799, akin respectively to input bus 701, search field 711, output field 715 and output bus 749 of Figure 7A. In addition, CAM 750 includes mask field 764, which stores a mask associated with individual locations 770. Therefore, instead of a common mask for all locations, an individual mask maybe associated with each location of CAM 750.

In operation, when an input value (input bits) is provided on input bus 751, only the bit positions of each CAM location specified by the corresponding mask are compared with the input bits, and the output value in output field 765 for a matched location is provided on output bus 799. The output value may identify (either directly or indirectly) the processor to which the cell (or packet) may be assigned to for further processing.

Thus, different masks can be used for different locations. Each mask specifies the bit positions to be compared. The bit positions in turn are determined by the specific fields to be compared in the determination of a processor for processing cells as illustrated below.

### 12. Illustration with Reference to IP Environment

This section provides illustrations with reference to determining the subscriber (and thus the processor for processing) in two example scenarios: (1) When IP destination address uniquely identifies the subscriber, and (2) for L2TP. In the description of this section, the manner in which IP packets can be identified with a corresponding subscriber is described first. The manner in which such identification can be used for assignment of cells in an example embodiment is then described.

In general, it should be understood that the bit positions to be identified depends on the specific format used by the protocols. Information on IP and L2TP can be found in Request for Comments (RFCs) 768, 791 and 1483, which are all incorporated in their entirety into the present application herewith.

As to the example scenario 1, to determine a matching destination IP address in version 4.0 of the Internet Protocol, the following bit positions (expressed in terms of byte boundaries, with each byte containing 8 bits) may need to be examined to determine the following relationships:
Byte 1: IP version number = 4; and header length = 20 bytes; and
Bytes 17-20: Destination IP address of the received packet = IP address assigned to the specific subscriber.

Similarly, when subscriber data is received using L2TP, the following bit positions may need to be examined (i.e., unmasked in mask) to identify a subscriber (to whom the IP packet relates to) and thus the processor:
Byte 1: Same purpose as above
Byte 10: Protocol type = UDP
Bytes 17-20: Destination IP address of the received packet = IP address of an interface of ISN 250

The below bytes are examined assuming a IP header length of 20 bytes
Bytes 23-24: Destination UDP port number = Port number of L2TP protocol
Bytes 29-30: L2TP version, length and header information
Bytes 31-32: If length is not present, Tunnel ID assigned to the subscriber = tunnel ID specified by the received IP packet
Bytes 33-34: If length is present, Tunnel ID assigned to the subscriber = tunnel ID specified by the received IP packet
Bytes 35-36: Call ID of the received packet = Call ID assigned to the specific subscriber.

Thus, in general, each search may require examination of some bit positions which identify the packet format, version number and application type (e.g., L2TP), and some other bit positions which are specific to a subscriber (e.g., call ID and/or tunnel ID for L2TP case and destination IP address in the first example above). When all the bit positions match, a received IP packet may correspond to the subscriber associated with the matched location.

Continuing with reference to Figure 7B, one CAM location may be allocated for each search. For example, CAM location 770-A may be allocated for a search of the type of Example 1 above, and CAM location 770-B maybe allocated for a search of the type of Example 2 above. Mask field 764 for CAM location 770-A may have bit positions corresponding to bytes 1, 17 and 18 unmasked (set to 0), and the remaining bits may be masked (set to 1). Search field 761 of CAM location 770-A may contain data identifying the IP protocol version number, length, and the IP address identifying a subscriber system in the corresponding bit positions.

The contents of CAM location 770-B maybe similarly described. The bit positions according to the bytes noted above may be unmasked. Search field 761 may be set with appropriate values in the corresponding positions, with the tunnel ID and/or call ID uniquely identifying a subscriber.

Multiple entries maybe required for determining a subscriber if more than one protocol format needs to be supported. For example, in example 2 of above, one entry may need to be implemented for examining bytes 31 and 32 if length field is not present, and another entry may need to be implemented for examining bytes 33 and 34 if length field is present. Similarly, more entries may need to be implemented if a different version of IP protocol (e.g., IP version 6) can potentially be used by a subscriber. In general, the entries in CAM 750 define a search tree, with each leaf identifying a subscriber. Multiple leafs may identify the same subscriber. Once the header data (for IP and higher protocol data) is provided as input on input bus 751, the data stored in the output field 765 is provided as an output on output bus 799. As should be appreciated, data identifying multiple subscribers may be stored in locations 770, and a match is detected in a single access.

However, the width of the search field (and thus of mask and inputs) may need to be at least 40 bytes (320 bits) to examine the IP header and higher layers information completely. Often, commercial embodiments of CAMs with masks for individual locations are of less width. At least to address the width problem, some optimizations described below may be employed.

### 13. Optimizations

In an embodiment, only bytes 1, 7, 8, 10, 13-15, 17-20, 23, 24, and 27-36 of the IP packet are examined assuming an IP header of 20 bytes and version 4 of IP. However, different bit positions may be searched depending on the specific application as will be apparent to one skilled in the relevant arts based on the description provided herein. Such searches are also contemplated to be within the scope of the present invention.

The bytes noted above contain the information for applications such as L2TP, L2F, IPSEC well known in the relevant arts. By avoiding the other bytes in the search process, the required CAM width is minimized to 24 bytes (192 bits). However, it may be a requirement to operate with CAMs of smaller width. In an embodiment described below, a CAM providing for only 112 bits (14 bytes) in search field 761 may be provided.

In such a case, a search may be split into a sequence of searches, with subsequent searches being performed only upon a match of the previous searches in the sequence. A match of all the searches in the sequences indicates that the received IP packet relates to a subscriber to which the sequence of searches relate to, and a processor specified by the CAM output is used to process the IP packet.

Operation with CAMs of inadequate width is described with reference to L2TP below. The CAMs may be implemented with in the access ports 410 and trunk ports 420. For illustration, implementation in trunk port 420 is described below.

### 14. Trunk Port

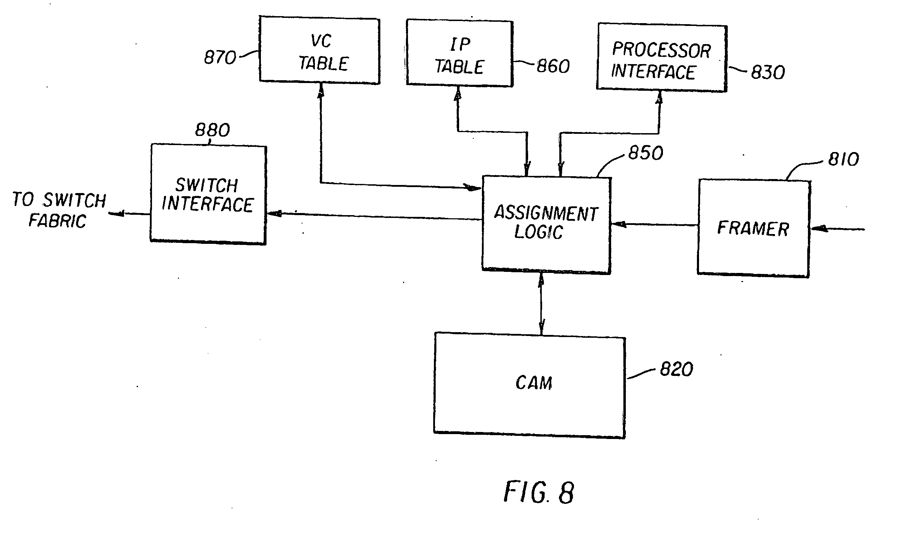

Figure 8 is a block diagram illustrating the implementation and operation of a circuit in accordance with the present invention. Framer 810 may provide the electrical interface when receiving the subscriber data. Framer 810 may assemble bytes from the received bits, and provide the assembled bytes to assignment logic 850. The bytes constitute cell data. Switch interface 880 receives cell data from assignment logic 850 and forwards the received data to packet service card 450. Framer 810 and switch interface 880 may be implemented in a known way.

IP table 860 enables the assignment of IP packets to processors based on the source or destination IP addresses. Specifically, by using IP table 860, the present invention may minimize the number of CAM locations required for supporting multiple subscribers. The CAM lookup may be used to first generate an index, and the data in table 860 may be used for a further determination of the specific processor group to which to assign the IP packet.

Processor interface 830 may interface with RMC 460, and configure CAM 820 to enable the data related to each subscriber to be assigned to a specific processor group in accordance with the present invention. Processor interface 830 may further configure IP table 860 and VC table 870 under the control of RMC 460. As related to L2TP type protocols, processor interface 830 may receive tunnel related data (e.g., call. ID, tunnel ID and corresponding processor information) from RMC 460 and configure CAM 820 to assign IP packets related to a subscriber to a specific processor group. CAM 820, VC-table 870, and IP table 860 may be shared by all access ports and trunk ports in ISN 250.

VC-table 870 may store data representing a mapping of the VPI/VCI header information in an ATM cell to a unique connection identifier. Thus, VC-table 870 returns the connection identifier in response to receiving VPI/VCI header data. IP table 860 and VC-table 870 may be implemented using fast memories such as SRAMs.

CAM 820 may be similar to CAM 750 of Figure 7B and includes masks per CAM location. The masks and search fields are configured such that a matching entry can be identified quickly. The manner in which CAM 820 may need to be configured will be clearer from the below description.

The output of CAM 820 may represent an identifier. The identifier may either directly represent a processor or a processor group, or may serve as an index for a further search. In the embodiments described herein, the identifier represents a processor group or an index into IP table 860. The output of CAM 820 may also specify whether the output is to be interpreted as an index or as an index for a further search.

Assignment logic 850 receives each IP packet in the form of a sequence of cells, and determines the processor group on which to process the IP packet. To make such a determination, assignment logic 850 selects the relevant bytes of the header (IP header and upper protocol headers as requires), typically from the first cell of a sequence of cells forming an IP packet. The selected bytes are provided as an input to CAM 820. The output of CAM 820 represents an identifier as noted above.

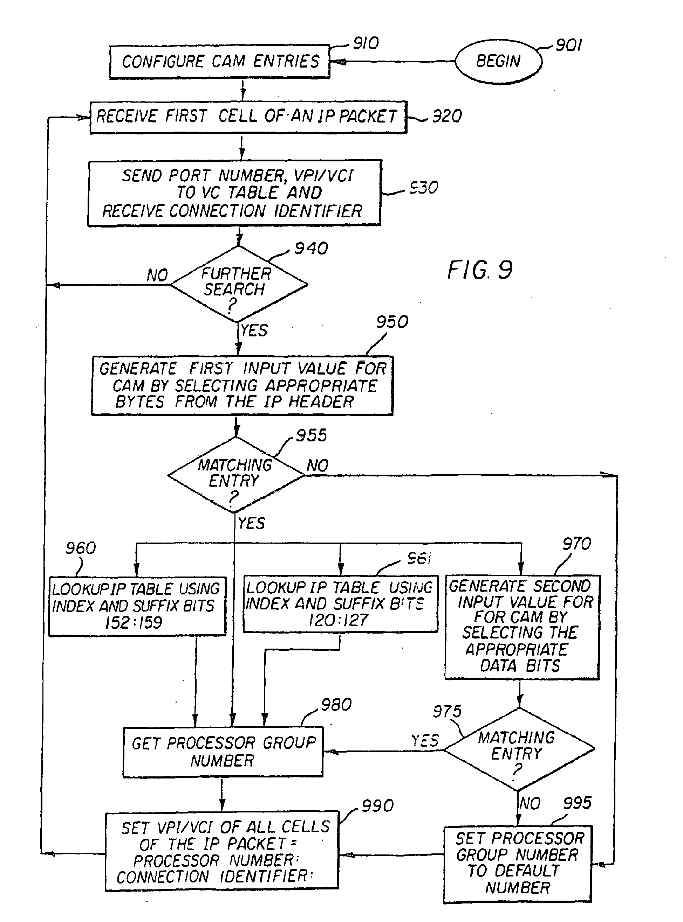

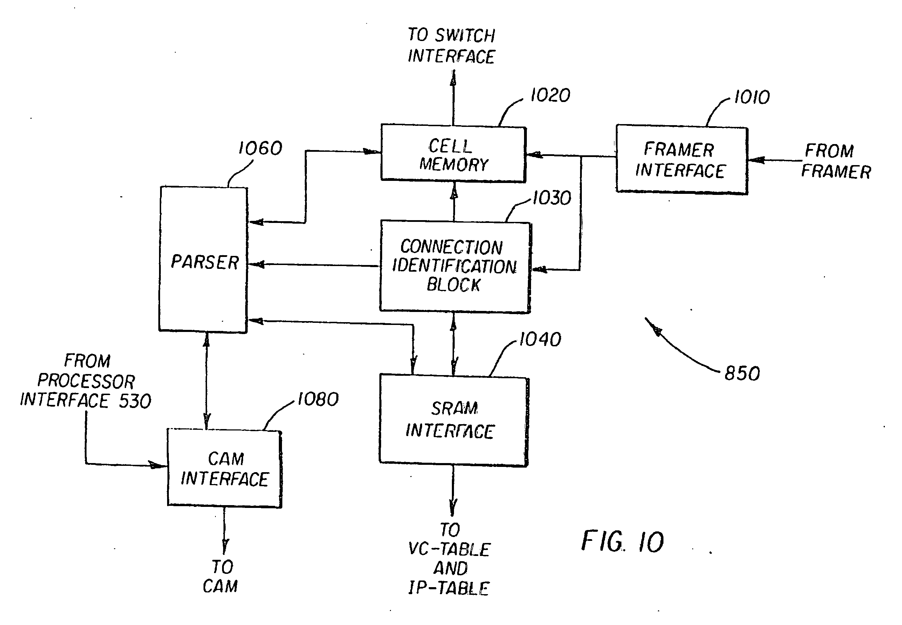

In an embodiment, the cell header is modified for all the sequence of cells forming an IP packet, with the modified header identifying the processor (group) on which to process the IP packet. An example embodiment of packet service card 450 using the modified cell header to assign to the identified processor (group) is described below in further detail with reference to Figures 9 and 10. The Figures further illustrate the use of multiple CAM searches when the length of the search field of the CAM is not long enough.

### 15. Method

Figure 9 depicts a flow-chart illustrating the manner in which IP packets related to a subscriber can be assigned to a processor(s) in accordance with the present invention. In step 910, the masks and search fields in each of the CAM locations are configured, with the masks specifying the bit positions to be examined, and the search fields specifying the specific values (from the packet header) which identify a subscriber. As noted above, RMC 460 and processor interface 830 may perform such configuration in an embodiment. Typical considerations in some example scenarios are described below.

Some of the entries of CAM 820 maybe configured dynamically when ISN 250 is operational and processing the subscriber data. For example, when a subscriber establishes a connection by dialing-in over a telephone line and is assigned a new IP address, an entry may be established based on IP destination address.

Some other entries of CAM 820 may be configured statically. For example, when multiple subscribers share the same ATM virtual connection and are connected to the same access port, and if the IP address(es) used by each subscriber are known, a CAM entry may be configured for examination of the source IP address.

In an embodiment, a single entry may be used for each subscriber, uniquely identifiable by a single (source or destination) IP address. One problem with using an entry for each such subscriber is that an unreasonably large number of locations may be required in CAM 820. The large location requirement may be a problem at least in ISP environments in which each subscriber may be assigned a unique address upon dialing into the ISP network. The present invention can be used to minimize the number of locations required in CAM 820 as described below in further detail.

Instead of assigning a single location for each IP address, a single location maybe allocated for a group of IP addresses. The processor for processing the IP packet may be determined in combination with the entries stored in IP table 860. For example, the first three bytes of the IP address may identify the group, and the output of CAM 820 may serve as an index to a base address of IP table 860. The last byte of the IP address may serve as the offset from the base address, and the location in IP table 860 at the offset may contain the processor number. When a single CAM location contains an index for a group of IP addresses, the mask for the CAM location may be chosen to reflect the grouping. For example, the first three bytes of an IP address may represent a group, and a mask of 00.00.00.ff may be chosen. Therefore, the CAM search provides an index to the first of the 256 (or 254 to account of subnet broadcasts) addresses, and IP table 860 may be accessed to determine the processor for processing a received IP packet. The retrieval of the processor identifier from IP table 860 is described below (with reference to step 960 and 961) in further detail.

In the case of tunneling, as noted above, the IP version number, header length, IP protocol type (i.e., for UDP), IP destination address, UDP destination port number, L2TP version number, tunnel ID and call ID maybe examined to determine the processor for processing an IP packet. The necessary information generated during tunnel and call set-up may be provided by RMC 460 as noted above, and CAM 820 may be configured with the appropriate mask and search field.

In some situations, multiple subscribers may share the same tunnel. In such a situation, each subscriber may be uniquely identified by the IP addresses. To minimize the CAM lookups, all the packets for a tunnel maybe assigned to a single packet service card 450, and the processors in the assigned packet service card 450 may differentiate between different subscribers by the examination of IP addresses encoded within the tunnel data.

In step 920, the first cell (Aheader cell≅) of a sequence of cells forming an IP packet may be received. The last cell of an IP packet may be determined according to AAL5 ATM standard well known in the relevant arts, and a subsequent cell may be deemed to be the first cell of the IP packet.

In step 930, assignment logic 850 may send the port number on which the cell was received, VPI and VCI of the received cell to VC-table 870, and receive a connection identifier and data indicating whether further search is required. Further search is typically required if the assignment to a processor (group) requires further examination of the IP packet formed by the cells.

Typically, a data bit retrieved from VC-table 870 indicates whether further search is required. If no search is required, the header of the cells of the IP packet may not be altered and be passed to switch interface 880. Control may then pass to step 920 if further search is not required and to step 950 if further search is required.

In step 950, assignment logic 850 may construct a first input value for CAM 820 by selecting some of the bytes from the cells forming an IP packet. The bytes need to be selected consistent with the search fields and masks used in the storage in step 910. Typically, the first cell includes all the data required to construct the input value.

In an embodiment, ISN 250 may support both LLC/SNAP and VC Mux. In general, VC Mux maybe setup for a single protocol (IP version 4 in the example here), and LLC/SNAP includes a byte which specifies the Ethertype field. The Ethertype field may specify IP version 4 or 6, or other protocols common in the Ethernet type environments. Only the details of LLC/SNAP and VC Mux as applicable to the present invention are provided here. For a further description of the two protocols, the reader is referred to RFC 1483, which is incorporated in its entirety herewith.

To accommodate both LLC/SNAP and VC Mux protocols, an embodiment of assignment logic 850 may include the following bytes in the first input value:
Bytes 1 and 2 (of the first input value): Ethertype field of LLC/SNAP or don=t care in the case of VC Mux
Byte 3: Byte 1 of IP header
Bytes 4-5: Bytes 7 and 8 of IP header
Byte 6: Byte 10 of IP header
Bytes 7-9: Bytes 13-15 of IP header
Bytes 10-13: Bytes 17-20 of IP header
Byte 14: Search type field described below

Search type field may specify different types of searches being performed on CAM 820. For example, the field may specify whether it is a first search (i.e., step 950) or a second search (i.e., step 970 described below). The field may further specify whether the input IP packet is received on a LLC/SNAP type virtual connection or VC Mux type virtual connection. It may be noted again that the search fields in each of the CAM locations need to be stored consistent with the format for the input values. Typically, the type field for the second search onwards may be formed from the output of previous search.

Again, data in search field 761 needs to be stored consistent with the format (i.e., selected bytes and the sequence in which presented to CAM) of the input values. The format of the input field in an example scenario is noted above.

The output of CAM 820 maybe examined in step 955 to determine whether a matching entry exists. If no match is detected, control passes to step 995 where a default processor group may be chosen to process the IP packet. In case of a match, control passes to one of steps 960, 961, 970 and 980 depending on the output of CAM 820 as described below.

The output data of CAM 820 identifies the processor (group) either directly or indirectly. The data itself may contain a processor identifier in the case of direct identification. In the case of indirect identification, additional searches are typically required. To specify whether the CAM output contains the processor identifier or not, a flag may be included in the output. The flag identifies the manner in which the processor can be determined further.

If the flag has a first value (for example, 1), the search for the matched entry corresponds to a group of subscribers, who are being identified by destination IP addresses. Therefore, in step 960, an entry with address of [pre-specified base address identified by the retrieved Index + the last byte of the IP destination address in the received IP packet] in IP table 860 may be retrieved. The retrieved entry may contain the processor (group) identifier.

If the flag has a second value, the search for the matched entry corresponds to a group of subscribers, who are identified by source IP addresses. Control then passes to step 961. Step 961 is performed similar to step 960, except that the last byte of the source IP address (i.e., bits 120:127) is used as an offset from the base address identified by the retrieved index. Control passes to step 980 from both steps 960 and 961, where the processor identifier is selected from the result of the access from IP table 860.

If the flag has a third value, the result of the search for the CAM search of step 950 contains the processor identifier. This may be the case, for example, when IP packets requiring a specific specialized service have to be assigned to a specialized processor. Another example is when a received IP packet relates to a routing protocol such as OSPF. The CAM entries may need to be configured consistent with such matching requirements in step 910.

If the flag has a fourth value, control passes to step 975, in which case a further search of CAM 820 may be required to determine the processor (group) identifier. These further searches may be required in cases such as, L2TP, L2F, IP Sec, as will be apparent to one skilled in the relevant arts. As noted above, the second level of search maybe required due to the limited number of bits (e.g., 112) available in the search field of CAMs with masks. Should CAMs contain sufficient number of bits in the search field, the multiple levels can be avoided for more throughput performance.

In an embodiment, the second input value for CAM 820 may have the following format assuming a 20 byte IP header:
Byte 1-2 (of the second input value): Bytes 23 and 24 representing the UDP destination port number
Bytes 3-13: Bytes 27-37 of the received cell
Byte 14: Search type

The search type may specify that the present search represents a second search, which may avoid any inadvertent matches. In an embodiment, the search type of the second search may be formed from the bits of the output of the first search. The format and the bytes chosen above suffice for searching for IP Sec, L2TP, L2F, and many other protocols as will be apparent to one skilled in the relevant arts based on the disclosure provided herein.

If there is a matching entry, the CAM output may contain the processor group identifier and control passes to step 980. In step 980, the appropriate bits in the output may be selected for the processor group identifier. If no matching entry exists, control passes to step 995, in which a default processor identifier is chosen. All unmatched IP packets may be sent to a default processor.

Thus, a processor group identifier is determined at the end of steps 980 and 995. Control then passes to step 990, which illustrates an example approach for ensuring that the identified processor group executes the IP packet received in the form of multiple ATM cells.

In step 990, the VCI and VPI fields of all the ATM cells forming the IP packet are replaced respectively by the connection identifier and the processor identifier. The last cell of the IP packet may be determined according to AAL5 of the ATM standard as is well known in the relevant arts. Once the last cell is processed in step 990, control passes to step 920, where the first cell of a subsequent IP packet is examined.

Thus, the method of Figure 9 illustrates an example approach of efficiently assigning the IP packet to a pre-designated processor group. The processor group may be identified by the VPI field as noted above in step 990. As described above, switch fabric 440 may forward the cells to the processor group identified by the VPI field. As the processor group contains the processing rules for the subscriber to which the cells relate to, the corresponding processing rules may be applied in processing the cells (or the IP packet formed from the cells).

Thus, by replacing the VPI/VCI fields of the ATM header, assignment logic 850 ensures that a packet received in the form of ATM cells is sent to the appropriate processor group. An embodiment of assignment logic 850 is described in further detail below.

### 16. Assignment logic

Figure 10 is a block diagram illustrating the details of assignment logic 850 in one embodiment. Framer interface 1010 receives bytes from framer 810 and stores the received bytes in cell memory 1020. Connection identification block 1030 receives the header bytes, and sends the VPI/VCI data and port number to VC-table 870. Connection identification block 1030 receives a connection identifier from VC-table 870 if VC-table 870 is pre-configured with the data for the connection. If the connection data is not pre-specified, the cells may be sent to a specialized pre-designated processor group. Connection identification block 1030 may interface with VC-table 870 using SRAM interface 1040.

Parser 1060 may perform all steps of the flow-chart of Figure 9 except step 910 by interfacing with other components. Parser 1060 receives the connection identifier from connection identification block 1030 and header data in the IP packet from cell memory 1020, and determines the processor group identifier. Parser 1060 may interface with CAM 820 through CAM interface 1080, and with IP table 860 through SRAM interface 1040.

Using the retrieved data, parser 1060 may determine the VPI/VCI of the cells when substitution is required. Parser 1060 may store the new values in cell memory 1020 to substitute the new VPI/VCI values. Cell memory 1020 may need to contain sufficient storage space to buffer cells for sufficient time while parser 1060 determines the new VPI/VCI data.

The data from cell memory 1020 is sent to switch interface 880.

Thus, by replacing the VCI field of cells with the processor identifier, parser 1060 may enable switch fabric 440 to quickly forward cells to the appropriate processor group for processing the IP packets. In other words, switch fabric 440 may merely need to examine the cell header (a small number of bits) to assign the subscriber data to a specific processor (group). The processor group may in turn be configured to provide the service policies specific to the corresponding subscriber.

Even though the present invention is described as assigning data to different processor groups for providing different service policies, it will be apparent to implement the present invention in several other embodiments as will be apparent to one skilled in the relevant arts based on the disclosure provided herein.

It should be noted that the above described embodiment(s) of Figures 8 - 10 illustrate merely example approaches to implementing steps 140 and 150 of Figure 1.

## Claims

1. A method of assigning an internet protocol (IP) packet related to a subscriber to one or more processors in an internet service node (250) ISN, said ISN (250) containing a plurality of processors, wherein said one or more processors are capable of processing said IP packet to provide service policies desired for said subscriber, said method comprising: (a) configuring a content addressable memory, CAM, said CAM containing a plurality of locations, each location of said plurality of locations having a mask, a search field and an output field, said CAM being designed to receive an input value and compare said input value with data in said search field at bit positions specified by said mask for each of said plurality of locations, said CAM being designed to generate as output the data stored in said output field if there is a match with the corresponding location, said search field and said mask of said location being configured with data identifying said subscriber, said output field of said location being set to data identifying the one or more processors suitable for processing data related to said subscriber; (b) receiving said IP packet in the form of a sequence of cells including a first cell containing the header data of said IP packet; (c) providing data in said first cell as said input value to said CAM; (d) receiving as an output of said CAM the data stored in said output field of a location if the corresponding search field matches said input value at the bit positions specified by the corresponding mask; and (e) assigning said sequence of cells to said one or more processors identified by said output received in (d), whereby said IP packet is assigned to said one or more processors suitable for processing said IP packet if the data in said first cell matches data stored in said location at bit positions specified by said mask of said location.

2. The method of claim 1, wherein said data provided in (c) comprises bytes 1, 7, 8, 10, and 13-20 of said header data of said IP packet.

3. The method of claim 1, wherein said output of (d) identifies a processor group suitable for processing said IP packet and said processor group includes said one or more processors assigned to in (e).

4. The method of claim 1, wherein a switch fabric (440) forwards each cell to one of said one or more processors according to the cell header, and (e) comprises modifying the cell header of said sequence of cells.

5. The method of claim 1, wherein (a) comprises setting said mask of said location to examine at least some of the bit positions corresponding to an IP address, and said search field of said location to a plurality of IP addresses in combination with said mask, wherein at least some of said IP addresses are associated with said subscriber.

6. The method of claim 5, wherein each of said IP addresses comprises an IP source address and/or an IP destination address.

7. The method of claim 5, said method further comprises: (1) maintaining an IP table mapping each of said plurality of IP addresses to a processor identifier or a processor group identifier; and (m) using bits in the masked positions of the IP address of said IP packet and said output of (d) to retrieve said processor identifier or said processor group identifier, wherein said processor group comprises a plurality of processors, wherein said sequence of cells are assigned to a processor identified by said processor identifier or said processor group identified by said processor group identifier.

8. The method of claim 1, wherein if said search field does not contain sufficient number of bits to store data identifying said subscriber, said method further comprising: (n) storing said data and corresponding masks identifying said subscriber in more than one of said locations; (o) providing different portions of said data as different inputs to said CAM, wherein said input of (c) is provided last; and (p) using said output of (d) to identify said processor or processor group for processing only if matches exist for all of said different inputs.

9. The method of claim 8, wherein subscriber data is received using an L2TP tunnel.

10. The method of claim 8, wherein (n) comprises: (q) providing bytes 1, 7, 8, 10, 13-15, and 17-20 of the IP packet contained in said first cell as a first input; and (r) providing bytes 23, 24, and 27-37 of the IP packet contained in said first cell as a second input.

11. A method of assigning a cell to one or more of a plurality of processors comprised in an internet service node, ISN, said method comprising: (a) configuring a content addressable memory, CAM, comprising a plurality of locations, each location of said plurality of locations having a mask, a search field and an output field, said CAM being designed to receive an input value and compare said input value with data in said search field at bit positions specified by said mask for each of said plurality of locations, said search field, said mask and said output field of a first location comprised in said plurality of locations being configured with a first search value, a first mask value and a first output value respectively, said search field, said mask and said output field of a second location comprised in said plurality of locations being configured with a second search value, a second mask and a second output value respectively, wherein said first search value, said first mask value and said first output value are not equal to said second search value, said second mask and said second output value respectively and wherein said first output value and said second output value contain data identifying one or more processors comprised in said plurality of processors: (b) receiving said cell in said ISN; (c) providing data in said cell as said input value to said CAM ; (d) receiving as an output of said CAM the data stored in said output field of a location if the corresponding search field matches said input value at the bit positions specified by the corresponding mask; and (e) assigning said cell to a processor identified by said output received in (d).

12. The method of claim 11, wherein said cell is a header cell of a sequence of cells forming a packet, said method further comprising assigning all of said sequence of cells to said processor.

13. An internet service node, ISN, (250) for providing a desired set of service policies desired by each of a plurality of subscribers, said ISN comprising: a plurality of processors, wherein each of said plurality of subscribers is assigned to a subset of said plurality of processors, wherein said subset is configured with processing rules which provide a set of service policies desired by said corresponding subscriber; a port coupled to receive data related to one of said plurality of subscribers, said port including a content addressable memory, CAM, the CAM comprising a plurality of locations, each of said plurality of locations having a mask, a search field and an output field, said CAM being designed to receive an input value and compare said input value with data in said search field at bit positions specified by said mask for each of said plurality of locations, said CAM being designed to generate as output the data stored in said output field if there is a match with the corresponding location, said search field and said mask of said location being configured with data identifying packets suitable for processing by one or more of said plurality of processors, said output field being configured with data identifying one or more processors suitable for processing a corresponding packet; and an assignment logic to receive a header cell and provide data from said header cell as said input value of said CAM, whereby the output of said CAM identifies one or more processors suitable for processing said packet, the port determining, from the output of said CAM, a subset of processors which are designed to process data related to said one of said plurality of subscribers; and a switch fabric coupled to said plurality of processors and said port, wherein said switch fabric receives said data from said port and forwards said data to said subset of processors according to the determination of said port.

14. The ISN of claim 13, wherein each of said plurality of processors is provided as a processor group in a packet service card, wherein said packet service card contains a plurality of processor groups, and wherein said ISN contains a plurality of packet service cards.

15. The ISN of claim 13, wherein said port receives said data as a sequence of ATM cells.

16. The ISN of claim 15, wherein said port determines an identifier of said subset of processors and sends said identifier to said switch fabric, wherein said switch fabric assigns said ATM cells to said subset of processors based on said identifier.

17. The ISN of claim 16, wherein said port modifies a header of each of said ATM cells to include said identifier in said header such that said switch fabric can forward said ATM cells to said subset of processors by examining said header.

18. The ISN of claim 17, wherein said port comprises: a framer to receive said data related to said one of said plurality of subscribers; the content addressable memory, CAM, containing a plurality of locations, each of said plurality of locations having a mask, a search field and an output field, said CAM being designed to receive an input value and compare said input value with data in said search field at bit positions specified by said mask for each of said plurality of locations, said CAM being designed to generate as output the data stored in said output field if there is a match with the corresponding location, wherein the data stored in the output field of said CAM identifies an identifier of a processor group either directly or indirectly, and wherein each entry of said mask and search field are implemented to store data identifying a subscriber such that said identifier can be determined using said data stored in said output field; and an assignment logic coupled to said CAM and said framer, said assignment logic determining said identifier by providing the received data as an input to said CAM, said assignment logic including said identifier in said header.

19. The ISN of claim 18, wherein said identifier is stored in a virtual path identifier, VPI, or virtual channel identifier, VCI, field of said header.

20. The ISN of claim 19, wherein said sequence of cells contain an Internet Protocol (IP) packet, and said assignment logic provides bytes 1, 7, 8, 10, and 13-20 of an IP header as said input to said CAM.

21. The ISN of claim 19, further comprising: a virtual channel, VC, table storing a mapping of virtual path identifier/virtual channel identifier, VPI/VCI, and port number to a connection identifier, wherein each entry of said VC table further indicates whether the VPI/VCI of a received cell needs to be replaced, wherein said assignment logic accesses an entry in said VC table corresponding to a received cell comprised in said received data, and modifies said header only if data in said entry indicates that the VPI/VCI field is to be replaced.

22. The ISN of claim 21, wherein said assignment logic sets the VCI of cells forming said received data to said connection identifier and said VPI of said cells to said identifier.

23. The ISN of claim 18, wherein said search field does not contain sufficient number of bits to store data identifying said subscriber, and wherein said CAM is designed to store in a plurality of entries data identifying said subscriber, wherein said assignment logic examines the output of said plurality of entries in determining said identifier.

24. The ISN of claim 23, wherein said assignment logic uses the output of one of said plurality of entries as an input to another one of said plurality of entries, wherein the output of said another of said plurality of entries identifies said processor identifier or processor group identifier.

25. The ISN of claim 23, wherein data related to said subscriber is received using an L2TP tunnel.

26. The ISN of claim 24, wherein said assignment logic is designed to provide bytes 1, 7, 8, 10, 13-15, and 17-20 of the IP packet contained in a first cell of said received data as a first input, and bytes 3, 24, and 27-37 of the IP packet contained in said first cell as a second input.

27. An internet service node (ISN) for processing a packet comprising a sequence of cells including a header cell, said ISN comprising: a plurality of processors; a content addressable memory, CAM, containing a plurality of locations, each of said plurality of locations having a mask, a search field and an output field, said CAM being designed to receive an input value and compare said input value with data in said search field at bit positions specified by said mask for each of said plurality of locations, said CAM being designed to generate as output the data stored in said output field if there is a match with the corresponding location, said search field and said mask of said location being configured with data identifying packets suitable for processing by one or more of said plurality of processors, said output field being configured with data identifying one or more processors suitable for processing a corresponding packet; and an assignment logic to receive said header cell and provide data from said header cell as said input value of said CAM, whereby the output of said CAM identifies one or more processors suitable for processing said packet, said assignment logic assigning all of said sequence of cells to said one or more processors according to said output of said CAM, wherein said packet is processed by a suitable processor.

28. The ISN of claim 27, wherein said assignment logic is designed to assign said sequence of cells by setting at least a portion of the cell header of each cell to an identifier, said ISN further comprising a switch fabric which forwards said sequence of cells to processors according to cell headers.

29. The ISN of claim 28, wherein said ISN receives packets related to a plurality of subscribers, and wherein the mask and search fields of each location are configured to identify a subscriber, and wherein the corresponding output field is designed to identify one or more of said processors suitable for processing packets related to the subscriber identified by the corresponding mask field and search field.

30. The ISN of claim 29, wherein said packet comprises an IP packet.

31. The ISN of claim 30, wherein said mask of a location is configured for examination of at least some of the bit positions corresponding to an IP address, and said search field of said location to a plurality of IP addresses in combination with said mask, wherein at least some of said IP addresses are associated with said subscriber.

32. The ISN of claim 31, wherein each of said IP addresses comprises an IP source address or an IP destination address.

33. The ISN of claim 31, further comprising a memory for storing an IP table mapping each of said plurality of IP addresses to a processor identifier or a processor group identifier, wherein said assignment logic is designed to use bits in the masked positions of the IP address and the output of said CAM to retrieve said identifier, wherein said sequence of cells are assigned to one or more processors according to said identifier.

34. The ISN of claim 30, wherein said search field does not contain sufficient number of bits to store data identifying each subscriber, and wherein said CAM is configured to store said data and corresponding masks identifying said subscriber in more than one of said locations, and wherein said assignment logic is designed to send different portions of said data as different inputs to said CAM, wherein said assignment logic determines that said packet relates to a subscriber only upon a match for all of said inputs.

35. The ISN of claim 34, wherein said assignment logic is designed to provide bytes 1, 7, 8, 10, 13-15, and 17-20 of the IP packet contained in said header cell as a first input, and bytes 23, 24, 27-37 of the IP packet contained in said header cell as a second input.

36. The ISN of claim 29, further comprising a service manager which configures said CAM to cause packets related to said subscriber to be assigned to one or more of said processors, wherein said service manager further configures said one or more processors with processing rules suitable for processing said packets related to said subscriber.

37. The ISN of claim 36, further comprising an access port, wherein said access port and/or said trunk port contains said CAM and said assignment logic.

## Patentansprüche

1. Verfahren zur Zuordnung eines Internet-Protokoll- (IP-) Paketes, das zu einem Teilnehmer gehört, zu einem oder mehreren Prozessoren in einem Internet-Dienstknoten (250) ISN, wobei der ISN (250) eine Vielzahl von Prozessoren enthält, wobei einer oder mehrere Prozessoren in der Lage sind, das IP-Paket zu verarbeiten, um Dienstrichtlinien bereitzustellen, die für diesen Teilnehmer gewünscht sind, wobei das Verfahren Folgendes umfasst: (a) Konfigurieren eines inhaltsadressierbaren Speichers, CAM, wobei der CAM eine Vielzahl von Speicherplätzen enthält, wobei jeder Speicherplatz der Vielzahl von Speicherplätzen eine Maske, ein Suchfeld und ein Ausgabefeld aufweist, wobei der CAM so ausgelegt ist, dass er einen Eingangswert empfängt und den Eingangswert mit Daten in dem Suchfeld an durch die Maske spezifizierten Bitpositionen für jeden der Vielzahl von Speicherplätzen vergleicht, wobei der CAM so ausgelegt ist, dass er als Ausgang die in dem Ausgabefeld gespeicherten Daten erzeugt, wenn sich eine Übereinstimmung mit dem entsprechenden Speicherplatz ergibt, wobei das Suchfeld und die Maske des Speicherplatzes mit Daten konfiguriert sind, die den Teilnehmer identifizieren, wobei das Ausgabefeld des Speicherplatzes auf Daten gesetzt ist, die einen oder mehrere Prozessoren identifizieren, die zur Verarbeitung von auf diesen Teilnehmer bezogenen Daten geeignet sind; (b) Empfangen des IP-Paketes in Form einer Folge von Zellen, unter Einschluss einer ersten Zelle, die die Kopffeld-Daten des IP-Paketes enthält; (c) Liefern von Daten in der ersten Zelle als Eingangswert an den CAM; (d) Empfangen, als einen Ausgang des CAM, der Daten, die in dem Ausgabefeld eines Speicherplatzes gespeichert sind, wenn das entsprechende Suchfeld mit dem Eingangswert an den durch die entsprechende Maske spezifizierten Bitpositionen übereinstimmt; und (e) Zuordnen der Folge von Zellen zu dem einen oder mehreren Prozessoren, die durch den in (d) empfangenen Ausgang identifiziert sind, wodurch das IP-Paket dem einen oder den mehreren Prozessoren zugeordnet wird, die für die Verarbeitung des IP-Paketes geeignet sind, wenn die Daten in der ersten Zelle mit den Daten übereinstimmen, die in dem Speicherplatz an Bitpositionen gespeichert sind, die durch die Maske dieses Speicherplatzes spezifiziert sind.

2. Verfahren nach Anspruch 1, bei dem die in (c) bereitgestellten Daten die Bytes 1, 7, 8, 10 und 13-20 der Kopffeld-Daten des IP-Paketes umfassen.

3. Verfahren nach Anspruch 1, bei dem der Ausgang von (d) eine Prozessor-Gruppe identifiziert, die für die Verarbeitung des IP-Paketes geeignet ist, und die Prozessor-Gruppe den einen oder die mehreren Prozessoren einschließt, die in (e) zugeordnet wurden.

4. Verfahren nach Anspruch 1, bei dem eine Vermittlungsstruktur (440) jede Zelle an einen von dem einen oder mehreren Prozessoren entsprechend dem Zellen-Kopftfeld weiterleitet, und das (e) die Modifikation des Zellen-Kopffeldes der Folge von Zellen umfasst.

5. Verfahren nach Anspruch 1, bei dem (a) das Setzen der Maske des Speicherplatzes zur Überprüfung zumindest einiger der Bitpositionen, die einer IP-Adresse entsprechen, und des Suchfeldes des Speicherplatzes auf eine Vielzahl von IP-Adressen in Kombination mit der Maske umfasst, wobei zumindest einige der IP-Adressen dem Teilnehmer zugeordnet sind.

6. Verfahren nach Anspruch 5, bei dem jede der IP-Adressen eine IP-Quellenadresse und/oder eine IP-Zieladresse umfasst.

7. Verfahren nach Anspruch 5, wobei das Verfahren weiterhin Folgendes umfasst: (I) Unterhalten einer IP-Tabelle, die jede der Vielzahl von IP-Adressen auf eine Prozessor-Identifikation oder eine Prozessor-Gruppen-Identifikation abbildet, und (m) Verwenden von Bits in den maskierten Positionen der IP-Adresse des IP-Paketes und des Ausgangs von (b) zur Rückgewinnung der Prozessor-Identifikation oder der Prozessor-Gruppen-Identifikation, wobei die Prozessor-Gruppe eine Vielzahl von Prozessoren umfasst, wobei die Folge von Zellen einem Prozessor, der durch die Prozessor-Identifikation identifiziert oder der Prozessor-Gruppe zugeordnet wird, die durch die Prozessor-Gruppen-Identifikation identifiziert ist.

8. Verfahren nach Anspruch 1, bei dem, wenn das Suchfeld keine ausreichende Anzahl von Bits zum Speichern von den Teilnehmer identifizierenden Daten enthält, das Verfahren weiterhin Folgendes umfasst: (n) Speichern der Daten und entsprechenden Masken, die den Teilnehmer in mehr als einen der Speicherplätze identifizieren; (o) Bereitstellen unterschiedlicher Teile der Daten als unterschiedliche Eingänge an den CAM, wobei der Eingang von (c) als letztes geliefert wird; und (p) Verwenden des Ausgangs von (d) zur Identifikation des Prozessors oder der Prozessor-Gruppe zur Verarbeitung lediglich dann, wenn eine Übereinstimmung für alle die verschiedenen Eingänge existiert.

9. Verfahren nach Anspruch 8, bei dem die Teilnehmer-Daten unter Verwendung eines L2TP-Tunnels empfangen werden.

10. Verfahren nach Anspruch 8, bei dem (n) Folgendes umfasst: (q) Bereitstellen von Bytes 1, 7, 8, 10, 13-15 und 17-20 des IP-Paketes, das in der ersten Zelle enthalten ist, als einen ersten Eingang, und (r) Bereitstellen der Bytes 23, 24 und 27-37 des in der ersten Zelle enthaltenen IP-Paketes als einen zweiten Eingang.

11. Verfahren zur Zuordnung einer Zelle zu einem oder mehreren Prozessoren einer Vielzahl von Prozessoren, die in einem Internet-Dienstknoten, ISN, enthalten sind, wobei das Verfahren Folgendes umfasst: (a) Konfigurieren eines inhaltsadressierbaren Speichers, CAM, der eine Vielzahl von Speicherplätzen enthält, wobei jeder Speicherplatz der Vielzahl von Speicherplätzen eine Maske, ein Suchfeld und ein Ausgabefeld aufweist, wobei der CAM so ausgelegt ist, dass er einen Eingangswert empfängt und diesen Eingangswert mit Daten in dem Suchfeld an durch die Maske spezifizierten Bitpositionen für jeden der Vielzahl von Speicherplätzen vergleicht, wobei das Suchfeld, die Maske und das Ausgabefeld eines ersten Speicherplatzes, der in der Vielzahl von Speicherplätzen enthalten ist, mit einem ersten Suchwert, einer ersten Maske bzw. einem ersten Ausgangswert konfiguriert wird, wobei das Suchfeld, die Maske und das Ausgabefeld eines zweiten Speicherplatzes, der in der Vielzahl von Speicherplätzen enthalten ist, mit einem zweiten Suchwert, einer zweiten Maske bzw. einem zweiten Ausgangswert konfiguriert wird, wobei der erste Suchwert, die erste Maske und der erste Ausgangswert nicht gleich dem zweiten Suchwert, der zweiten Maske bzw. dem zweiten Ausgangswert sind, und wobei der erste Ausgangswert und der zweite Ausgangswert Daten enthalten, die einen oder mehrere Prozessoren identifizieren, der in der Vielzahl von Prozessoren enthalten ist; (b) Empfangen der Zelle in dem ISN; (c) Liefern von Daten in der Zelle als den Eingangswert an den CAM; (d) Empfangen, als ein Ausgang des CAM, die Daten, die in dem Ausgabefeld eines Speicherplatzes gespeichert sind, wenn das entsprechende Suchfeld mit dem Eingangswert an den Bitpositionen übereinstimmt, die durch die entsprechende Maske spezifiziert sind; und (e) Zuordnen der Zelle zu einem Prozessor, der durch den Ausgang identifiziert ist, der in (d) empfangen wurde.

12. Verfahren nach Anspruch 11, bei dem die Zelle eine Kopffeld-Zelle einer Folge von Zellen ist, die ein Paket bilden, wobei das Verfahren weiterhin die Zuordnung der gesamten Folge von Zellen zu dem Prozessor umfasst.

13. Internet-Dienstknoten, ISN, (250) zur Lieferung eines gewünschten Satzes von Dienstrichtlinien, der von jedem einer Vielzahl von Teilnehmern gewünscht wird, wobei der ISN Folgendes umfasst: eine Vielzahl von Prozessoren, wobei jedem der Vielzahl von Teilnehmern einer Teilmenge der Vielzahl von Prozessoren zugeordnet ist, wobei die Teilmenge mit Verarbeitungsrichtlinien konfiguriert ist, die einen Satz von Dienstrichtlinien ergeben, der von einem entsprechenden Teilnehmer gewünscht wird; einen Port, der zum Empfang von Daten angeschaltet ist, die sich auf einen der Vielzahl von Teilnehmern beziehen, wobei der Port einen inhaltsadressierbaren Speicher, CAM, einschließt, wobei der CAM eine Vielzahl von Speicherplätzen umfasst, wobei jeder der Vielzahl von Speicherplätzen eine Maske, ein Suchfeld und ein Ausgabefeld aufweist, wobei der CAM so ausgelegt ist, dass er einen Eingangswert empfängt und den Eingangswert mit Daten in dem Suchfeld an durch die Maske spezifizierten Bitpositionen für jeden der Vielzahl von Speicherplätzen vergleicht, wobei der CAM so ausgelegt ist, dass er als Ausgang die in dem Ausgabefeld gespeicherten Daten erzeugt, wenn sich eine Übereinstimmung mit dem entsprechenden Speicherplatz ergibt, wobei das Suchfeld und die Maske des Speicherplatzes mit Daten konfiguriert sind, die Pakete identifizieren, die für die Verarbeitung durch einen oder mehrere der Vielzahl von Prozessoren geeignet sind, wobei das Ausgabefeld mit Daten konfiguriert ist, die einen oder mehrere Prozessoren identifizieren, die für die Verarbeitung eines entsprechenden Paketes geeignet sind; und eine Zuordnungs-Logik zum Empfang einer Kopffeld-Zelle und zur Lieferung von Daten von der Kopffeld-Zelle als den Eingangswert der CAM, wodurch der Ausgang des CAM einen oder mehrere Prozessoren identifiziert, die für die Verarbeitung des Paketes geeignet sind, wobei der Port aus dem Ausgang des CAM eine Teilmenge von Prozessoren bestimmt, die zur Verarbeitung von Daten ausgelegt sind, die sich auf den einen der Vielzahl von Teilnehmern beziehen; und eine Vermittlungsstruktur, die mit der Vielzahl von Prozessoren und dem Port gekoppelt ist, wobei die Vermitttungsstruktur die Daten von dem Port empfängt und diese Daten an die Teilmenge von Prozessoren entsprechend der Feststellung des Ports weiterleitet.

14. ISN nach Anspruch 13, bei dem jeder der Vielzahl von Prozessoren als eine Prozessor-Gruppe in einer Paket-Dienste-Karte bereitgestellt ist, wobei die Paket-Dienste-Karte eine Vielzahl von Prozessor-Gruppen enthält und wobei der ISN eine Vielzahl von Paket-Dienste-Karten enthält.

15. ISN nach Anspruch 13, bei dem der Port die Daten als eine Folge von ATM-Zellen empfängt.

16. ISN nach Anspruch 15, bei dem der Port eine Identifikation der Teilmenge von Prozessoren bestimmt und die Identifikation an die Vermiltlungsstruktur sendet, wobei die Vermittlungsstruktur die ATM-Zellen der Teilmenge von Prozessoren auf der Grundlage der Identifikation zuordnet.

17. ISN nach Anspruch 16, bei dem der Port ein Kopffeld jeder der ATM-Zellen modifiziert, um die Identifikation in das Kopffeld einzufügen, derart, dass die Vermittlungsstruktur die ATM-Zellen an die Teilmenge von Prozessoren durch Überprüfung des Kopffeldes weiterleiten kann.

18. ISN nach Anspruch 17, bei dem der Port Folgendes umfasst: eine Rahmenbildungseinrichtung zum Empfang der Daten, die sich auf den einen der Vielzahl von Teilnehmern beziehen; wobei der inhaltsadressierbare Speicher, CAM, eine Vielzahl von Speicherplätzen enthält, wobei jeder der Vielzahl von Speicherplätzen eine Maske, ein Suchfeld und ein Ausgabefeld aufweist, wobei der CAM so ausgelegt ist, dass er einen Eingangswert empfängt und den Eingangswert mit den Daten in dem Suchfeld an durch die Maske spezifizierten Bitpositionen für jeden der Vielzahl von Speicherplätzen vergleicht, wobei der CAM so ausgelegt ist, dass er als Ausgang die in dem Ausgabefeld gespeicherten Daten erzeugt, wenn sich eine Übereinstimmung mit dem entsprechenden Speicherplatz ergibt, wobei die in dem Ausgabefeld des CAM gespeicherten Daten eine Identifikation einer Prozessor-Gruppe entweder direkt oder indirekt identifizieren, und wobei jeder Eintrag der Maske und des Suchfeldes so ausgebildet ist, dass er einen Teilnehmer identifizierende Daten derart speichert, dass die Identifikation unter Verwendung der in dem Ausgabefeld gespeicherten Daten bestimmt werden kann; und eine Zuordnungslogik, die mit dem CAM und der Rahmenbildungseinrichtung gekoppelt ist, wobei die Zuordnungslogik die Identifikation durch Liefern der empfangenen Daten als einen Eingang an den CAM bestimmt, wobei die Zuordnungslogik die Identifikation in dem Kopffeld einschließt.

19. ISN nach Anspruch 18, bei dem die Identifikation In einem virtuellen Pfad-Identifikations-, VPI-, oder virtuellen Kanal-Identifikations-, VCI-, Feld des Kopffeldes gespeichert ist.

20. ISN nach Anspruch 19, bei dem die Folge von Zellen ein Internetprotokoll- (IP-) Paket enthält und die Zuordnungslogik die Bytes 1, 7, 8, 10 und 13-20 eines IP-Kopffeldes als Eingang an den CAM liefert.

21. ISN nach Anspruch 19, der weiterhin eine virtuelle Kanal-, VC-, Tabelle umfasst, die eine Abbildung der virtuellen Pfad-Identifikation/virtuellen Kanal-Identifikation, VPI/VCI, und Port-Nummer auf eine Verbindungs-Identifikation speichert, wobei jeder Eintrag der VC-Tabelle weiterhin anzeigt, ob die VPI/VCI einer empfangenen Zelle ersetzt werden muss, wobei die Zuordnungslogik einen Zugriff auf einen Eintrag in der VC-Tabelle ausführt, die einer empfangenen Zelle entspricht, die in den empfangenen Daten enthalten ist, und das Kopffeld nur dann modifiziert, wenn die Daten in dem Eintrag anzeigen, dass das VPI/VCI-Feld zu ersetzen ist.

22. ISN nach Anspruch 21, bei dem die Zuordnungslogik die VCI von Zellen, die die empfangenen Daten bilden, auf die Verbindungs-Identifikation und die VPI der Zellen auf die Identifikation setzt.

23. ISN nach Anspruch 18, bei dem das Suchfeld keine ausreichende Anzahl von Bits zum Speichern von den Teilnehmer identifizierenden Daten enthält, und bei dem der CAM zur Speicherung von den Teilnehmer identifizierenden Daten in einer Vielzahl von Einträgen ausgelegt ist, wobei die Zuordnungslogik den Ausgang der Vielzahl von Einträgen bei der Bestimmung der Identifikation überprüft.

24. ISN nach Anspruch 23, bei dem die Zuordnungslogik den Ausgang von einem der Vielzahl von Einträgen als einen Eingang für einen weiteren der Vielzahl von Einträgen verwendet, wobei der Ausgang des weiteren der Vielzahl von Einträgen die Prozessor-Identifikation oder Prozessor-Gruppen-Identifikation identifiziert.

25. ISN nach Anspruch 23, bei dem die auf den Teilnehmer bezogenen Daten unter Verwendung eines L2TP-Tunnels empfangen werden.

26. ISN nach Anspruch 24, bei dem die Zuordnungslogik so ausgelegt ist, dass sie die Bytes 1, 7, 8, 10, 13-15 und 17-20 des IP-Paketes, das in einer ersten Zelle der empfangenen Daten enthalten ist, als einen ersten Eingang und die Bytes 3, 24 und 27-37 des IP-Paketes, das in der ersten Zelle enthalten ist, als einen zweiten Eingang bereitstellt.

27. Internet-Dienstknoten, ISN, zur Verarbeitung eines Paketes, das eine Folge von Zellen unter Einschluss einer Kopffeld-Zelle umfasst, wobei der ISN Folgendes umfasst: eine Vielzahl von Prozessoren; einen inhaltsadressierbaren Speicher, CAM, der eine Vielzahl von Speicherplätzen enthält, wobei jeder der Vielzahl von Speicherplätzen eine Maske, ein Suchfeld und ein Ausgabefeld aufweist, wobei der CAM so ausgelegt ist, dass er einen Eingangswert empfängt und den Eingangswert mit Daten in dem Suchfeld an durch die Maske spezifizierten Bitpositionen für jeden der Vielzahl von Speicherplätzen vergleicht, wobei der CAM so ausgelegt ist, dass er als Ausgang die in dem Ausgabefeld gespeicherten Daten erzeugt, wenn sich eine Übereinstimmung mit dem entsprechenden Speicherplatz ergibt, wobei das Suchfeld und die Maske des Speicherplatzes mit Daten konfiguriert ist, die Pakete identifizieren, die für die Verarbeitung durch einen oder mehrere der Vielzahl von Prozessoren geeignet sind, und das Ausgabefeld mit Daten konfiguriert ist, die einen oder mehrere Prozessoren identifizieren, die für die Verarbeitung eines entsprechenden Paketes geeignet sind; und eine Zuordnungslogik zum Empfang der Kopffeld-Zelle und zur Lieferung von Daten von der Kopffeld-Zelle als einen Eingangswert des CAM, wobei der Ausgang des CAM einen oder mehrere Prozessoren identifiziert, die für die Verarbeitung des Paketes geeignet sind, wobei die Zuordnungslogik alle Zellen der Folge von Zellen dem einen oder mehreren Prozessoren entsprechend dem Ausgang des CAM zuordnet, wobei die Pakete durch einen geeigneten Prozessor verarbeitet werden.

28. ISN nach Anspruch 27, bei dem die Zuordnungslogik so ausgelegt ist, dass sie die Folge von Zellen dadurch zuordnet, dass sie zumindest einen Teil des Zellen-Kopffeldes jeder Zelle auf eine Identifikation setzt, wobei der ISN weiterhin eine Vermittlungsstruktur umfasst, die die Folge von Zellen an Prozessoren entsprechend den Zellen-Kopffeldern weiterleitet.

29. ISN nach Anspruch 28, bei dem der ISN Pakete empfängt, die sich auf eine Vielzahl von Teilnehmern beziehen, und wobei die Masken- und Suchfelder jedes Speicherplatzes so konfiguriert sind, dass sie einen Teilnehmer identifizieren, und wobei das entsprechende Ausgabefeld so ausgelegt ist, dass es einen oder mehrere der Prozessoren identifiziert, die für die Verarbeitung von Paketen geeignet sind, die auf den Teilnehmer bezogen sind, der durch das entsprechende Maskenfeld und Suchfeld identifiziert ist.

30. ISN nach Anspruch 29, bei dem das Paket ein IP-Paket umfasst.

31. ISN nach Anspruch 30, bei dem die Maske eines Speicherplatzes für eine Überprüfung von zumindest einer der einer IP-Adresse entsprechenden Bitpositionen und des Suchfeldes des Speicherplatzes einer Vielzahl von IP-Adressen in Kombination mit der Maske konfiguriert ist, wobei zumindest einige der IP-Adressen dem Teilnehmer zugeordnet sind.

32. ISN nach Anspruch 31, bei dem jede der IP-Adressen eine IP-Quellen-Adresse oder eine IP-Ziel-Adresse umfasst.

33. ISN nach Anspruch 31, der weiterhin einen Speicher zum Speichern einer IP-Tabelle umfasst, die jede der Vielzahl von IP-Adressen auf eine Prozessor-Identifikation oder eine Prozessor-Gruppen-Identifikation abbildet, wobei die Zuordnungslogik so ausgelegt ist, dass sie Bits in den maskierten Positionen der IP-Adresse und den Ausgang des CAM verwendet, um die Identifikation zurückzugewinnen, wobei die Folge von Zellen einen oder mehreren Prozessoren entsprechend der Identifikation zugeordnet wird.

34. ISN nach Anspruch 30, bei dem das Suchfeld keine ausreichende Anzahl von Bits zur Speicherung von jedem Teilnehmer identifizierenden Daten enthält, und bei dem der CAM zum Speichern der Daten und der entsprechenden Maske konfiguriert ist, die den Teilnehmer in mehr als einem der Speicherplätze identifizieren, und wobei die Zuordnungslogik zum Sendern unterschiedlicher Teile der Daten als unterschiedliche Eingänge an den CAM ausgelegt ist, wobei die Zuordnungslogik lediglich bei einer Übereinstimmung für alle der Eingänge bestimmt, dass das genannte Paket auf einen Teilnehmer bezogen ist,.

35. ISN nach Anspruch 34, bei dem die Zuordnungslogik zur Lieferung der Bytes 1, 7, 8, 10, 13-15 und 17-20 des in der Kopffeld-Zelle enthaltenen IP-Paketes als einen ersten Eingang und der Bytes 23, 24, 27-37 des in der Kopffeld-Zelle enthaltenen IP-Paketes als einen zweiten Eingang ausgelegt ist.

36. ISN nach Anspruch 29, der weiterhin einen Dienste-Manager umfasst, der den CAM so konfiguriert, dass bewirkt wird, dass Pakete, die sich auf den Teilnehmer beziehen, einem oder mehreren der Prozessoren zugeordnet werden, wobei der Dienste-Manager weiterhin den einen oder die mehreren Prozessoren mit Verarbeitungsregeln konfiguriert, die zur Verarbeitung der dem Teilnehmer zugehörigen Pakete geeignet sind.

37. ISN nach Anspruch 36, der weiterhin einen Zugangsport umfasst, wobei der Zugangsport und/oder der Trunk-Port den CAM und die Zuordnungslogik enthält.

## Revendications

1. Méthode d'attribution d'un paquet de protocole internet (IP) associé à un abonné à un ou plusieurs processeurs dans un noeud de service Internet ISN (250), ledit ISN (250) contenant une pluralité de processeurs, dans laquelle lesdits un ou plusieurs processeurs sont capables de traiter ledit paquet IP pour fournir des politiques de service souhaitées pour ledit abonné, ladite méthode comprenant : (a) la configuration d'une mémoire adressable par contenu, CAM, ladite CAM contenant une pluralité d'emplacements, chaque emplacement de ladite pluralité d'emplacements comportant un masque, un champ de recherche et un champ de sortie, ladite CAM étant conçue pour recevoir une valeur d'entrée et comparer ladite valeur d'entrée avec des données dans ledit champ de recherche à des positions de bits spécifiées par ledit masque pour chacun de ladite pluralité d'emplacements, ladite CAM étant conçue pour générer, en tant que sortie, les données stockées dans ledit champ de sortie s'il y a une correspondance avec l'emplacement correspondant, ledit champ de recherche et ledit masque dudit emplacement étant configurés avec des données identifiant ledit abonné, ledit champ de sortie dudit emplacement étant initialisé avec des données identifiant lesdits un ou plusieurs processeurs appropriés pour traiter les données associées audit abonné ; (b) la réception dudit paquet IP sous la forme d'une séquence de cellules comprenant une première cellule contenant les données d'en-tête dudit paquet IP ; (c) la fourniture des données dans ladite première cellule en tant que dite valeur d'entrée à ladite CAM ; (d) la réception, en tant que sortie, de ladite CAM des données stockées dans ledit champ de sortie d'un emplacement si le champ de recherche correspondant correspond à ladite valeur d'entrée aux positions de bits spécifiées par le masque correspondant ; et (e) l'attribution de ladite séquence de cellules auxdits un ou plusieurs processeurs identifiés par ladite sortie reçue en (d), ledit paquet IP étant ainsi attribué auxdits un ou plusieurs processeurs appropriés pour traiter ledit paquet IP si les données dans ladite première cellule correspondent aux données stockés dans ledit emplacement aux positions de bits spécifiées par ledit masque dudit emplacement.

2. Méthode selon la revendication 1, dans laquelle lesdites données fournies en (c) comprennent les octets 1, 7, 8, 10, et 13 à 20 desdites données d'en-tête dudit paquet IP.

3. Méthode selon la revendication 1, dans laquelle ladite sortie de (d) identifie un groupe de processeurs appropriés pour traiter ledit paquet IP et ledit groupe de processeurs comprend lesdits un ou plusieurs processeurs attribués en (e).

4. Méthode selon la revendication 1, dans laquelle une structure de commutateurs (440) achemine chaque cellule vers l'un desdits un ou plusieurs processeurs conformément à l'en-tête de cellule, et (e) comprend la modification de l'en-tête de cellule de ladite séquence de cellules.

5. Méthode selon la revendication 1, dans laquelle (a) comprend l'initialisation dudit masque dudit emplacement pour examiner au moins certaines des positions de bits correspondant à une adresse IP, et dudit champ de recherche dudit emplacement à une pluralité d'adresses IP en combinaison avec ledit masque, dans laquelle au moins certaines desdites adresses IP sont associées audit abonné.

6. Méthode selon la revendication 5, dans laquelle chacune desdites adresses IP comprend une adresse IP de source et/ou une adresse IP de destination.

7. Méthode selon la revendication 5, ladite méthode comprenant en outre : (1) le maintien d'une table IP mappant chacune de ladite pluralité d'adresses IP vers un identifiant de processeur ou un identifiant de groupe de processeurs ; et (m) l'utilisation des bits aux positions masquées de l'adresse IP dudit paquet IP et de ladite sortie de (d) pour récupérer ledit identifiant de processeur ou ledit identifiant de groupe de processeurs, dans laquelle ledit groupe de processeurs comprend une pluralité de processeurs, dans laquelle ladite séquence de cellules est attribuée à un processeur identifié par ledit identifiant de processeur ou audit groupe de processeurs identifié par ledit identifiant de groupe de processeurs.

8. Méthode selon la revendication 1, dans laquelle si ledit champ de recherche ne contient pas un nombre suffisant de bits pour stocker des données identifiant ledit abonné, ladite méthode comprenant en outre : (n) le stockage desdites données et des masques correspondants identifiant ledit abonné dans plus d'un desdits emplacements ; (o) la fourniture des différentes parties desdites données en tant que différentes entrées à ladite CAM, dans laquelle ladite entrée de (c) est fournie en dernier ; et (p) l'utilisation de ladite sortie de (d) pour identifier ledit processeur ou ledit groupe de processeurs pour un traitement uniquement si des correspondances existent pour toutes lesdites différentes entrées.

9. Méthode selon la revendication 8, dans laquelle des données d'abonné sont reçues en utilisant un tunnel L2TP.

10. Méthode selon la revendication 8, dans laquelle (n) comprend, (q) la fourniture des octets 1, 7, 8, 10, 13 à 15, et 17 à 20 du paquet IP contenu dans ladite première cellule en tant que première entrée ; et (r) la fourniture des octets 23, 24 et 27 à 37 du paquet IP contenu dans ladite première cellule en tant que deuxième entrée.

11. Méthode d'attribution d'une cellule à un ou plusieurs processeurs d'une pluralité de processeurs compris dans un noeud de service Internet, ISN, ladite méthode comprenant : (a) la configuration d'une mémoire adressable par contenu, CAM, comprenant une pluralité d'emplacements, chaque emplacement de ladite pluralité d'emplacements comportant un masque, un champ de recherche et un champ de sortie, ladite CAM étant conçue pour recevoir une valeur d'entrée et comparer ladite valeur d'entrée avec des données dans ledit champ de recherche à des positions de bits spécifiées par ledit masque pour chacun de ladite pluralité d'emplacements, ledit champ de recherche, ledit masque et ledit champ de sortie d'un premier emplacement compris dans ladite pluralité d'emplacements étant configurés avec une première valeur de recherche, une première valeur de masque et une première valeur de sortie, respectivement, ledit champ de recherche, ledit masque et ledit champ de sortie d'un deuxième emplacement compris dans ladite pluralité d'emplacements étant configurés avec une deuxième valeur de recherche, un deuxième masque et une deuxième valeur de sortie, respectivement, dans laquelle ladite première valeur de recherche, ladite première valeur de masque et ladite première valeur de sortie ne sont pas égales à ladite deuxième valeur de recherche, audit deuxième masque et à ladite deuxième valeur de sortie, respectivement, et dans laquelle ladite première valeur de sortie et ladite deuxième valeur de sortie contiennent des données identifiant un ou plusieurs processeurs compris dans ladite pluralité de processeurs ; (b) la réception de ladite cellule dans ledit ISN ; (c) la fourniture des données dans ladite cellule en tant que ladite valeur d'entrée à ladite CAM ; (d) la réception, en tant que sortie de ladite CAM, des données stockées dans ledit champ de sortie d'un emplacement si le champ de recherche correspondant correspond à ladite valeur d'entrée aux positions de bits spécifiées par le masque correspondant ; et (e) l'attribution de ladite cellule à un processeur identifié par ladite sortie reçue en (d).

12. Méthode selon la revendication 11, dans laquelle ladite cellule est une cellule d'en-tête d'une séquence de cellules formant un paquet, ladite méthode comprenant en outre l'attribution de la totalité de ladite séquence de cellules au dit processeur.

13. Noeud de service Internet, ISN, (250) pour fournir un ensemble souhaité de politiques de service souhaitées par chacun d'une pluralité d'abonnés, ledit ISN comprenant : une pluralité de processeurs, dans lequel chacun de ladite pluralité d'abonnés est attribué à un sous-ensemble de ladite pluralité de processeurs, dans lequel ledit sous-ensemble est configuré avec des règles de traitement qui fournissent un ensemble de politiques de service souhaitées par ledit abonné correspondant ; un port couplé pour recevoir des données associées à l'un de ladite pluralité d'abonnés, ledit port comprenant une mémoire adressable par contenu, CAM, la CAM comprenant une pluralité d'emplacements, chacun de ladite pluralité d'emplacements comportant un masque, un champ de recherche et un champ de sortie, ladite CAM étant conçue pour recevoir une valeur d'entrée et comparer ladite valeur d'entrée avec des données dans ledit champ de recherche à des positions de bits spécifiées par ledit masque pour chacun de ladite pluralité d'emplacements, ladite CAM étant conçue pour générer, en tant que sortie, les données stockés dans ledit champ de sortie s'il y a une correspondance avec l'emplacement correspondant, ledit champ de recherche et ledit masque dudit emplacement étant configurés avec des données identifiant des paquets appropriés pour un traitement par un ou plusieurs de ladite pluralité de processeurs, ledit champ de sortie étant configuré avec des données identifiant un ou plusieurs processeurs appropriés pour traiter un paquet correspondant ; et une logique d'attribution pour recevoir une cellule d'en-tête et fournir des données provenant de ladite cellule d'en-tête en tant que ladite valeur d'entrée de ladite CAM, la sortie de ladite CAM identifiant ainsi un ou plusieurs processeurs appropriés pour traiter ledit paquet, le port déterminant, à partir de la sortie de ladite CAM, un sous-ensemble de processeurs qui sont conçus pour traiter des données associées audit un de ladite pluralité d'abonnés ; et une structure de commutateurs couplée à ladite pluralité de processeurs et audit port, où ladite structure de commutateurs reçoit lesdites données dudit port et achemine lesdites données vers ledit sous-ensemble de processeurs conformément à la détermination dudit port.

14. ISN selon la revendication 13, dans lequel chacun de ladite pluralité de processeurs est fourni en tant que groupe de processeurs dans une carte de service de paquet, dans lequel ladite carte de service de paquet contient une pluralité de groupes de processeurs, et ledit ISN contenant une pluralité de cartes de service de paquet.

15. ISN selon la revendication 13, dans lequel ledit port reçoit lesdites données en tant que séquence de cellules ATM.

16. ISN selon la revendication 15, dans lequel ledit port détermine un identifiant dudit sous-ensemble de processeurs et envoie ledit identifiant à ladite structure de commutateurs, dans lequel ladite structure de commutateurs attribue lesdites cellules ATM au dit sous-ensemble de processeurs sur la base dudit identifiant.

17. ISN selon la revendication 16, dans lequel ledit port modifie un en-tête de chacune desdites cellules ATM pour qu'il comprenne ledit identifiant dans ledit en-tête de sorte que ladite structure de commutateurs puisse acheminer lesdites cellules ATM vers ledit sous-ensemble de processeurs en examinant ledit en-tête.

18. ISN selon la revendication 17, dans lequel ledit port comprend : un générateur de trame pour recevoir lesdites données associées audit un de ladite pluralité d'abonnés ; la mémoire adressable par contenu, CAM, contenant une pluralité d'emplacements, chacun de ladite pluralité d'emplacements comportant un masque, un champ de recherche et un champ de sortie, ladite CAM étant conçue pour recevoir une valeur d'entrée et comparer ladite valeur d'entrée avec des données dans ledit champ de recherche à des positions de bits spécifiées par ledit masque pour chacun de ladite pluralité d'emplacements, ladite CAM étant conçue pour générer, en tant que sortie, les données stockées dans ledit champ de sortie s'il y a une correspondance avec l'emplacement correspondant, dans lequel les données stockées dans le champ de sortie de ladite CAM identifient un identifiant d'un groupe de processeurs, soit directement, soit indirectement, et dans lequel chaque entrée dudit masque et dudit champ de recherche sont mises en oeuvre pour stocker des données identifiant un abonné de sorte que ledit identifiant puisse être déterminé en utilisant lesdites données stockées dans ledit champ de sortie ; et une logique d'attribution couplée à ladite CAM et audit générateur de trame, ladite logique d'attribution déterminant ledit identifiant en fournissant les données reçues en tant qu'entrée à ladite CAM, ladite logique d'attribution comprenant ledit identifiant dans ledit en-tête.

19. ISN selon la revendication 18, dans lequel ledit identifiant est stocké dans un identifiant de trajet virtuel, VPI, ou dans un identifiant de canal virtuel, VCI, dudit en-tête.

20. ISN selon la revendication 19, dans lequel ladite séquence de cellules contient un paquet de Protocole Internet (IP), et ladite logique d'attribution fournit les octets 1, 7, 8, 10, et 13 à 20 d'un en-tête IP en tant que ladite entrée à ladite CAM.

21. ISN selon la revendication 19, comprenant en outre : une table de canal virtuel, VC, stockant un mappage d'un identifiant de trajet virtuel/identifiant de canal virtuel, VPI/VCI, et un numéro de port vers un identifiant de connexion, dans lequel chaque entrée de ladite table de VC indique en outre si le VPI/VCI d'une cellule reçue doit être remplacé, dans lequel ladite logique d'attribution accède à une entrée dans ladite table de VC correspondant à une cellule reçue comprise dans lesdites données reçues, et modifie ledit en-tête seulement si des données dans ladite entrée indiquent que le champ VPI/VCI doit être remplacé.

22. ISN selon la revendication 21, dans lequel ladite logique d'attribution initialise le VCI des cellules formant lesdites données reçues audit identifiant de connexion et ledit VPI desdites cellules audit identifiant.

23. ISN selon la revendication 18, dans lequel ledit champ de recherche ne contient pas un nombre suffisant de bits pour stocker des données identifiant ledit abonné, et dans lequel ladite CAM est conçue pour stocker dans une pluralité d'entrées des données identifiant ledit abonné, dans lequel ladite logique d'attribution examine la sortie de ladite pluralité d'entrées pour déterminer ledit identifiant.

24. ISN selon la revendication 23, dans lequel ladite logique d'attribution utilise la sortie de l'une de ladite pluralité d'entrées en tant qu'entrée pour une autre de ladite pluralité d'entrées, dans lequel la sortie de ladite autre de ladite pluralité d'entrées identifie ledit identifiant de processeur ou ledit identifiant de groupe de processeurs.

25. ISN selon la revendication 23, dans lequel les données associées audit abonné sont reçues en utilisant un tunnel L2TP.

26. ISN selon la revendication 24, dans lequel ladite logique d'attribution est conçue pour fournir les octets 1, 7, 8, 10, 13 à 15, et 17 à 20 du paquet IP contenu dans une première cellule desdites données reçues en tant que première entrée, et les octets 3, 24, et 27 à 37 du paquet IP contenu dans ladite première cellule en tant que deuxième entrée.

27. Noeud de service Internet, ISN, pour traiter un paquet comprenant une séquence de cellules comprenant une cellule d'en-tête, ledit ISN comprenant : une pluralité de processeurs ; une mémoire adressable par contenu, CAM, contenant une pluralité d'emplacements, chacun de ladite pluralité d'emplacements comportant un masque, un champ de recherche et un champ de sortie, ladite CAM étant conçue pour recevoir une valeur d'entrée et comparer ladite valeur d'entrée avec des données dans ledit champ de recherche à des positions de bits spécifiées par ledit masque pour chacun de ladite pluralité d'emplacements, ladite CAM étant conçue pour générer, en tant que sortie, les données stockées dans ledit champ de sortie s'il y a une correspondance avec l'emplacement correspondant, ledit champ de recherche et ledit masque dudit emplacement étant configurés avec des données identifiant des paquets appropriés pour un traitement par un ou plusieurs de ladite pluralité de processeurs, ledit champ de sortie étant configuré avec des données identifiant un ou plusieurs processeurs appropriés pour traiter un paquet correspondant ; et une logique d'attribution pour recevoir ladite cellule d'en-tête et fournir des données provenant de ladite cellule d'en-tête en tant que ladite valeur d'entrée de ladite CAM, la sortie de ladite CAM identifiant ainsi un ou plusieurs processeurs appropriés pour traiter ledit paquet, ladite logique d'attribution attribuant la totalité de ladite séquence de cellules auxdits un ou plusieurs processeurs en fonction de ladite sortie de ladite CAM, dans lequel ledit paquet est traité par un processeur approprié.

28. ISN selon la revendication 27, dans lequel ladite logique d'attribution est conçue pour attribuer ladite séquence de cellules en initialisant au moins une partie de l'en-tête de cellule de chaque cellule à un identifiant, ledit ISN comprenant en outre une structure de commutateurs qui achemine ladite séquence de cellules vers des processeurs conformément aux en-têtes de cellule.

29. ISN selon la revendication 28, dans lequel ledit ISN reçoit des paquets associés à une pluralité d'abonnés, et dans lequel les champs de masque et de recherche de chaque emplacement sont configurés pour identifier un abonné, et dans lequel le champ de sortie correspondant est conçu pour identifier un ou plusieurs desdits processeurs appropriés pour traiter des paquets associés à l'abonné identifié par le champ de masque et le champ de recherche correspondants.

30. ISN selon la revendication 29, dans lequel ledit paquet comprend un paquet IP.

31. ISN selon la revendication 30, dans lequel ledit masque d'un emplacement est configuré pour examiner au moins certaines des positions de bits correspondant à une adresse IP, et ledit champ de recherche dudit emplacement à une pluralité d'adresses IP en combinaison avec ledit masque, dans lequel au moins certaines desdites adresses IP sont associées audit abonné.

32. ISN selon la revendication 31, dans lequel chacune desdites adresses IP comprend une adresse IP de source ou une adresse IP de destination.

33. ISN selon la revendication 31, comprenant en outre une mémoire pour stocker une table IP mappant chacune de ladite pluralité d'adresses IP vers un identifiant de processeur ou un identifiant de groupe de processeurs, dans lequel ladite logique d'attribution est conçue pour utiliser les bits aux positions masquées de l'adresse IP et la sortie de ladite CAM pour récupérer ledit identifiant, dans lequel ladite séquence de cellules est attribuée à un ou plusieurs processeurs conformément audit identifiant.

34. ISN selon la revendication 30, dans lequel ledit champ de recherche ne contient pas un nombre suffisant de bits pour stocker des données identifiant chaque abonné, et dans lequel ladite CAM est configurée pour stocker lesdites données et des masques correspondants identifiant ledit abonné dans plus d'un desdits emplacements, et dans lequel ladite logique d'attribution est conçue pour envoyer différentes parties desdites données en tant que différentes entrées à ladite CAM, dans lequel ladite logique d'attribution détermine que ledit paquet concerne un abonné seulement lorsqu'il y a une correspondance pour toutes les desdites entrées.

35. ISN selon la revendication 34, dans lequel ladite logique d'attribution est conçue pour fournir les octets 1, 7, 8, 10, 13 à 15, et 17 à 20 du paquet IP contenu dans ladite cellule d'en-tête en tant que première entrée, et les octets 23, 24, 27 à 37 du paquet IP contenu dans ladite cellule d'en-tête en tant que deuxième entrée.

36. ISN selon la revendication 29, comprenant en outre un gestionnaire de service qui configure ladite CAM pour provoquer des paquets associés audit abonné à attribuer à un ou plusieurs desdits processeurs, dans lequel ledit gestionnaire de service configure en outre lesdits un ou plusieurs processeurs avec des règles de traitement appropriées pour traiter lesdits paquets associés audit abonné.

37. ISN selon la revendication 36, comprenant en outre un port d'accès, dans lequel ledit port d'accès et/ou ledit port de réseau (« trunk port ») contien(nen)t ladite CAM et ladite logique d'attribution.
